# EUROPEAN PATENT APPLICATION

(11) **EP 4 254 321 A1**
(43) Date of publication of application: **04.10.2023**
(21) Application number: 23163734.9
(22) Date of filing: 23.03.2023
(51) Int. Cl.: G06T 5/00, G06T 5/20, G06T 5/50

(54) **SYSTEMS AND METHODS FOR PROCESSING IMAGERY**

(30) Priority: 25.03.2022 US 202263323644 P; 22.12.2022 US 202263434540 P
(71) Applicant: Palantir Technologies Inc., Denver, CO 80202 (US)
(72) Inventor: PATSEKIN, Aleksandr, Denver, Colorado, 80202 (US); REHMAN, Mueed Ur, Denver Colorado, 80202 (US); VAN ANDEL, Ethan, Denver, Colorado, 80202 (US); CHEN, Qinfeng, Denver, Colorado, 80202 (US); IMIG, Robert, Denver, Colorado, 80202 (US); GAUTUM, Simanta, Denver, Colorado, 80202 (US); CROSS, Jonathan Brandon Burke, Denver, Colorado, 80202 (US)
(74) Representative: Sayer, Robert David

(57) **Abstract**

In some examples, systems and methods for imagery registration are provided. For example, a method includes: applying a phase correlation to a plurality of pairs of frames; identifying a plurality of correlated pairs of frames and a plurality of uncorrelated pairs of frames based upon the phase correlation; generating a plurality of updated pairs of frames corresponding to the plurality of uncorrelated pairs of frames using the plurality of correlated pairs of frames; performing a reconstruction using the plurality of updated pairs of frames and the plurality of correlated pairs of frames to generate a reconstructed image; and applying a mask to the reconstructed image to generate a result image.

## Description

### CROSS REFERENCE TO RELATED APPLICATIONS

This application claims priority to U.S. Provisional Application Nos. 63/323,644 and 63/434,540, both entitled "SYSTEMS AND METHODS FOR SATELLITE IMAGERY REGISTRATION," and filed on March 25, 2022 and December 22, 2022, respectively.

### TECHNICAL FIELD

Certain embodiments of the present disclosure relate to processing imagery. More particularly, some embodiments of the present disclosure relate to reconstructing imagery from images frames with overlapping bands.

### BACKGROUND

Artificial intelligence is widely used in analyzing data to facilitate object detection, prediction, decision making, and other uses. For example, AI inference is a process of using AI models to make a prediction. AI inference often needs a large number of computing resources and memory resources.

Edge devices (e.g., devices with sensing and/or computing capability) can be deployed to dispersed locations on earth or in space. Some edge devices may include one or more sensors for collecting sensor data and/or one or more computing resources to process data (e.g., identifying objects). A satellite can include and/or integrate with edge devices. As an example, edge devices can be deployed to various areas to complete certain tasks. In some embodiments, edge devices include edge devices on satellites that can acquire images (e.g., still images, videos, etc.).

Hence, it is desirable to improve techniques for imagery registration.

### SUMMARY

The subject-matter for which protection is sought is defined in the claims.

Certain embodiments of the present disclosure relate to processing imagery (e.g., imagery from one or more satellites). Imagery may comprise one or more images comprising pixel data represented in any suitable format, for example RGB format. More particularly, some embodiments of the present disclosure relate to reconstructing imagery from images frames with overlapping bands. A band may refer to a wavelength range (e.g., a wavelength range for red, a wavelength range for green, a wavelength range for blue).

At least some aspects of the present disclosure are directed to a method. The method may be implemented by a computer system having one or more processors and one or more memories. The method includes: applying a phase correlation to a plurality of pairs of frames; identifying a plurality of correlated pairs of frames and a plurality of uncorrelated pairs of frames based upon the phase correlation; generating a plurality of updated pairs of frames corresponding to the plurality of uncorrelated pairs of frames using the plurality of correlated pairs of frames; performing a reconstruction using the plurality of updated pairs of frames and the plurality of correlated pairs of frames to generate a reconstructed image; and applying a mask to the reconstructed image to generate a result image.

At least some aspects of the present disclosure are directed to a computing device. The computing device includes one or more memories that includes instructions stored thereon, and one or more processors that are configured to execute the instruction and perform operations. The operations includes: applying a phase correlation to a plurality of pairs of frames; identifying a plurality of correlated pairs of frames and a plurality of uncorrelated pairs of frames based upon the phase correlation; generating a plurality of updated pairs of frames corresponding to the plurality of uncorrelated pairs of frames using the plurality of correlated pairs of frames; performing a reconstruction using the plurality of updated pairs of frames and the plurality of correlated pairs of frames to generate a reconstructed image; and applying a mask to the reconstructed image to generate a result image.

At least some aspects of the present disclosure are directed to a method. The method may be implemented by a computer system having one or more processors and one or more memories. The method includes: applying a phase correlation to a plurality of pairs of frames; identifying a plurality of correlated pairs of frames and a plurality of uncorrelated pairs of frames based upon the phase correlation; generating a plurality of updated pairs of frames corresponding to the plurality of uncorrelated pairs of frames using the plurality of correlated pairs of frames; performing a reconstruction using the plurality of updated pairs of frames and the plurality of correlated pairs of frames to generate a reconstructed image, wherein the reconstructed image includes one or more bands; and applying a mask to the reconstructed image to generate a result image, wherein the applying a mask to the reconstructed image comprises: calculating one or more intersections of the one or more bands of the reconstructed image to generate the mask; and cropping the reconstructed image by the mask to generate the result image.

Depending upon embodiment, one or more benefits may be achieved. These benefits and various additional objects, features and advantages of the present disclosure can be fully appreciated with reference to the detailed description and accompanying drawings that follow.

### BRIEF DESCRIPTION OF THE DRAWINGS

FIG. 1 is a simplified diagram showing a method for device constellations (e.g., meta-constellations) according to certain embodiments of the present disclosure.
FIG. 2 is an illustrative AIP architecture (e.g., an AIP and DMP architecture) diagram according to certain embodiments of the present disclosure.
FIG. 3 is an illustrative AIP system according to certain embodiments of the present disclosure.
FIG. 4 is an illustrative AIP diagram according to certain embodiments of the present disclosure.
FIG. 5 is an illustrative device constellation system (e.g., an AI meta-constellation system) according to certain embodiments of the present disclosure.
FIG. 6 is an illustrative device constellation system (e.g., an AI meta-constellation system) according to certain embodiments of the present disclosure.
FIG. 7 is an illustrative device constellation system (e.g., an AI meta-constellation system) according to certain embodiments of the present disclosure.
FIG. 8 is an illustrative device constellation environment according to certain embodiments of the present disclosure.
FIG. 9 is an illustrative AIP system (e.g., model orchestrators, task moderators), for example, used in a device constellation system, according to certain embodiments of the present disclosure.
FIG. 10 is an illustrative constellation environment according to certain embodiments of the present disclosure.
FIG. 11 shows an example device constellation system according to certain embodiments of the present disclosure.
FIG. 12 is an example device constellation environment (e.g., an AI meta-constellation environment) according to certain embodiments of the present application.
FIG. 13 is an example device constellation environment (e.g., an AI meta-constellation environment) according to certain embodiments of the present application.
FIG. 14 illustrates an example of consecutive frames with bands, according to certain embodiments of the present disclosure.
FIG. 15 illustrates examples of frames and overlaps, according to certain embodiments of the present disclosure.
FIG. 16 illustrates a simplified diagram showing a method for imagery registration, according to certain embodiments of the present disclosure.
FIG. 17 illustrates a simplified diagram showing a method for removing unfilled areas, according to certain embodiments of the present disclosure.
FIG. 18 illustrates a simplified diagram showing a method for removing visual artifacts, according to certain embodiments of the present disclosure.
FIG. 19 is a simplified diagram showing a method for device constellations (e.g., meta-constellations) according to certain embodiments of the present disclosure.
FIG. 20 illustrates a simplified diagram showing a computing system for imagery registration, according to certain embodiments of the present disclosure.

### DETAILED DESCRIPTION

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any range within that range.

Although illustrative methods may be represented by one or more drawings (e.g., flow diagrams, communication flows, etc.), the drawings should not be interpreted as implying any requirement of, or particular order among or between, various steps disclosed herein. However, certain some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items, and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information.

According to some embodiments, a device constellation system (e.g., an AI meta-constellation system) uses AI Inference Platform (AIP) for one or more constellations of edge devices. For example, the device constellation system combines one or more heterogenous satellite constellations and/or leveraging artificial intelligence (AI) to give one or more users one or more actionable insights from one or more overhead sensors. In some examples, the AI device constellation system (e.g., meta-constellation system) combines one or more edge devices (e.g., a satellite with one or more sensors) and/or leveraging models to give one or more users one or more actionable insights. In certain examples, an edge device is a physical device including one or more sensors, an AIP, and/or one or more model(s). As used herein, a model, referred to as a computing model, includes a model to process data. A model includes, for example, an AI model, a machine learning (MI,) model, a deep learning (DL) model, an image processing model, an algorithm, a rule, other computing models, and/or a combination thereof.

According to certain embodiments, AI Inference Platform (AIP) orchestrates between the input sensor data and output feeds. As an example, AIP is a model orchestrator, also referred to as a task orchestrator. For example, the input and/or output (e.g., "left" side, "right" side) of AIP are utilizing open standard formats. As an example, AIP takes care of the decoding of the input data, orchestration between processors and artificial intelligence (AI) models, and then packages up the results into an open output format for downstream consumers.

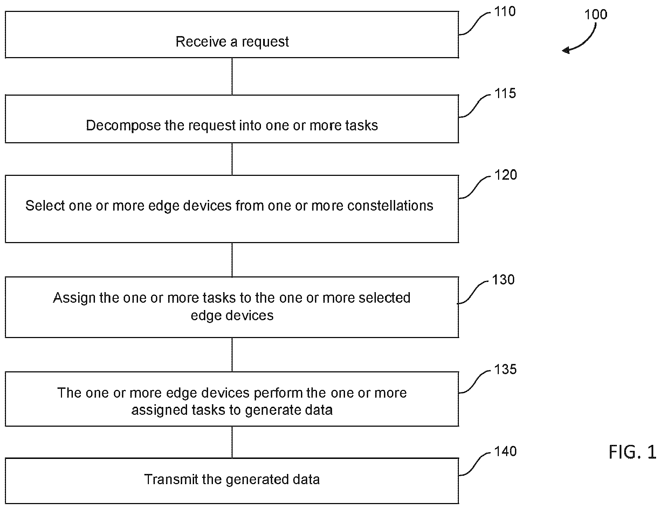

FIG. 1 is a simplified diagram showing a method for device constellations (e.g., meta-constellations) according to certain embodiments of the present disclosure. This diagram is merely an example. One of ordinary skill in the art would recognize many variations, alternatives, and modifications. The method 100 for device constellations includes processes 110, 115, 120, 130, 135, and 140. Although the above has been shown using a selected group of processes for the method 100 for device constellations, there can be many alternatives, modifications, and variations. For example, some of the processes may be expanded and/or combined. Other processes may be inserted to those noted above. Depending upon the embodiment, the sequence of processes may be interchanged with others replaced. Further details of these processes are found throughout the present disclosure.

In some embodiments, some or all processes (e.g., steps) of the method 100 are performed by the system 2000. In certain examples, some or all processes (e.g., steps) of the method 100 are performed by a computer and/or a processor directed by a code. For example, a computer includes a server computer and/or a client computer (e.g., a personal computer). In some examples, some or all processes (e.g., steps) of the method 100 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at the process 110, the system is configured to receive a request. In certain examples, the request is submitted by and/or received from a user. In some examples, the request is automatically generated by a device (e.g., a control device at a base station, a smart phone, etc.).

According to certain embodiments, at the process 115, the system is configured to decompose the request into one or more tasks. In some examples, the request is decomposed into one or more tasks based on one or more factors. In certain examples, the factors include one or more of a location, a time window, a frequency, an objective (e.g., locating an object), other factors, and/or a combination thereof. For example, the request is to monitor a space area for two weeks.

According to some embodiments, at the process 120, the system is configured to select one or more edge devices (e.g., a plurality of edge devices) from one or more constellations (e.g., a plurality of constellations). In some examples, each of the one or more constellations is owned by and/or operated by an entity (e.g., a government organization, a company, an industry organization, etc.). As an example, two constellations are owned by and/or operated by two different entities. In certain examples, a device constellation is formed including one or more edge devices from one or more constellations owned by and/or operated by various entities. For example, at the process 120, the system is configured to select multiple edge devices from a plurality of constellations, and each constellation of the plurality of constellations is owned by and/or operated by an entity (e.g., a government organization, a company, an industry organization, etc.). As an example, some selected multiple edge devices belong to a constellation owned by and/or operated by an entity, and other selected multiple edge devices belong to a different constellation owned by and/or operated by different entity. In some examples, the system is configured to select one or more edge devices based on capability, eligibility, and/or availability of the corresponding edge device. For example, an edge device is a satellite that includes one or more sensors, where the one or more sensors are also referred to as orbit sensors. As an example, an edge device includes one or more sensors in the space. For example, an edge device is selected based on a viewing angle of an imaging sensor on the edge device. In some examples, an edge device is selected based on a position in space (e.g., spatial location) and/or a viewing angle. In some examples, selecting an edge device based on spatial location and viewing angle is how a satellite is selected for a task. As an example, an edge device is selected based on its location in the water. In some examples, the system selects the edge device based upon one or more sensors and/or one or more models. For example, an edge device is selected to use a specific model to process data.

According to certain embodiments, at the process 130, the system is configured to assign the one or more tasks to the one or more selected edge devices. According to some embodiments, at the process 135, the one or more selected edge devices are configured to perform the one or more assigned tasks to generate data. In some examples, the one or more edge devices are configured to collect data during the performance of the one or more assigned tasks. In certain examples, the one or more edge devices are configured to process the collected data. In some examples, the edge device is configured to generate one or more insights by processing the data collected by one or more sensors on the edge device and/or data collected by one or more sensors on one or more other edge devices. In certain examples, the generated data by the one or more selected edge devices includes the collected data, the processed data, the one or more insights, and/or a combination thereof. As an example, an edge device is assigned with a task of monitoring a space area for two weeks and is configured to filter the monitoring data (e.g., removing certain data). For example, an edge device is assigned with a task of detecting wildfire and is configured to process data collected from various sensors on the edge device and transmit an insight of whether wildfire is detected.

According to some embodiments, the system is configured to request a source edge device to transmit data (e.g., collected data and/or processed data) to a destination edge device. In some examples, the destination edge device is configured to process data from the source edge device. In certain examples, the system is configured to move more complex processing to the one or more edge devices. In certain examples, two or more edge devices are configured to transmit data to a selected edge device for data processing.

According to certain embodiments, each of the one or more selected edge devices includes AI Inference Platform (AIP) that provides interfaces to one or more sub-systems (e.g., one or more sensors) and/or one or more models (e.g., one or more micro-models) and/or perform certain data processing. For example, the one or more selected edge devices are configured to perform the one or more assigned task by using at least one or more AIPs.

According to some embodiments, at the process 140, the one or more edge devices are configured to transmit the generated data (e.g., collected data, processed data, one or more insights, etc.). In some examples, the one or more edge devices are configured to transmit the generated data to a device (e.g., a control device at a base station, a smart phone, etc.).

As discussed above and further emphasized here, FIG. 1 is merely an example. One of ordinary skill in the art would recognize many variations, alternatives, and modifications. As an example, an edge device is an aircraft, a submarine, and/or a vehicle. As an example, an edge device includes one or more sensors in the air, in the space, under the sea, in the water, on the land, and/or at other locations.

According certain embodiments, device constellation systems and/or methods harness the power of growing satellite constellations, and/or deploy AI into space to provide insights to decision-makers on Earth. In some examples, device constellation systems and/or methods orchestrate and/or optimize hundreds of orbital sensors and AI models. In certain examples, device constellation systems and/or methods allow users to ask one or more questions (e.g., one or more time-sensitive questions) across entire planet. In some examples, some example questions include, for example, 1) where the indicators of wildfires are; 2) how are climate changes affecting crop productivity; and/or 3) when are naval fleets conducting operations.

According to some embodiments, device constellation systems and/or methods are configured to push edge AI technology to a new frontier. For example, device constellation systems and/or methods include a transformation in various fields, such as the fields of one of the hardest maritime issues - submarines. As an example, fast and stealthy, advanced submarines present threats to some countries. For example, to protect strategic interests, some countries and/or allied forces need to track every submarine's deployment around the world. As an example, at the forefront are anti-submarine warfare officers. In response to allied monitoring requests, in certain examples, device constellation systems and/or methods are configured to dynamically determine which orbiting sensors are available. In some examples, integrated through device constellation systems and/or methods, the one or more constellations collaboratively schedule coverage over one or more ports (e.g., each port of the one or more ports).

According to certain embodiments, the AIP assigns tailored one or more models (e.g., micro-models, AI models) to each satellite. As an example, running onboard the satellites, the one or more models automatically couple to submarines and stream one or more insights directly to users. For example, with the mission planned, the AIP associated with or integrated into the meta-constellation systems automatically reconfigures each of the satellites, for example, pushing the right micro-models into orbit. For example, as a software payload onboard, the AIP connects complex satellite subsystems to models (e.g., micro-models) and/or integrates new AI with the hardware. In some examples, as a satellite orbits, the AIP is configured to hot swap the right micro-models in the satellite and/or rapidly reconfigure the satellite.

In certain examples, the one or more models are configured to process one or more images or videos (e.g., imagery), detect the submarines, geolocate them, and/or determine any movements since the last collection pass, for example, all in under a second. In some examples, when the one or more models detect a submarine movement, the insight of a detection of submarine movement is directly downlinked to certain countries and/or allied forces as the satellite passes overhead. As an example, anti-submarine warfare officers are notified in just minutes.

According to some embodiments, meta-constellation systems and/or methods bring hundreds of satellites to bear on some hard problems (e.g., some hardest problems), for example, anti-submarine warfare officers deploying AI into orbit to find submarines, and/or first-responders leveraging AI to spot wildfire signs. In some examples, meta-constellation systems and/or methods are there to empower users.

According to certain embodiments, as the data generated by orbital sensors continues to increase in volume and complexity, the ability to run AI onboard satellites or satellite sensors is important (e.g., critical). In some examples, deploying AI at the edge in space allows for efficient and consistent processing of noisy, high-scale GEOINT and radio frequency (RF) data, reducing the amount of data that needs to be stored and transmitted and/or enabling low-latency decision-making for near real-time actions, such as tasking a sensor to perform a job. In certain examples, AIP deployed directly onboard spacecraft accelerates model deployment and improvement, improves data processing, and/or reduces the need to downlink data before taking action.

According to some embodiments, one or more solutions are described. For example, AIP is integrated into or associated with a system (e.g., a data integration system). As an example, AI Inference Platform (AIP) is an AI orchestration and fusion platform designed to run on cloud infrastructure, on-premise GPU servers, and/or Size, Weight, and Power (SWaP) optimized hardware for embedding into satellites. In some examples, AIP connects data to one or more algorithms, runs those algorithms in real-time, and/or produces one or more outputs that can either be used onboard by other systems or transmitted to ground. As an example, when coupled with a development and management platform (DMP), AIP allows one or more DMP-managed AI models to be seamlessly deployed from cloud to space. For example, insights from the one or more edge-deployed models can flow back into the DMP, advancing the retraining and Continuous Integration / Continuous Deployment (CI/CD) of one or more models across satellite constellations.

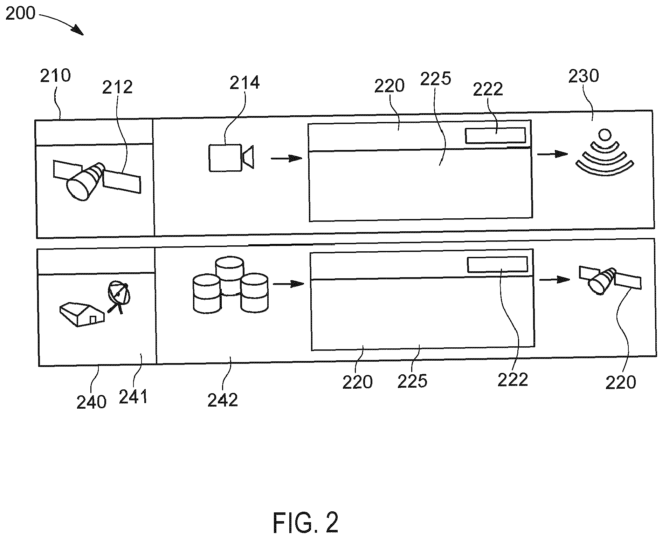

FIG. 2 is an illustrative AIP architecture 200 (e.g., an AIP and DMP architecture) diagram according to certain embodiments of the present disclosure. FIG. 2 is merely an example. One of ordinary skill in the art would recognize many variations, alternatives, and modifications.

According to some embodiments, the AIP architecture 200 (e.g., an AIP system) includes an AIP system 210 and a DMP system 240. In certain embodiments, the AIP system 210 includes an edge device 212, sensor data 214 (e.g., real-time sensor data), an AIP 220 on a runtime service running one or more models 225 via one or more interfaces 222, and model outputs 230. In some embodiments, the AIP architecture 200 includes a device 241 (e.g., a device at a ground station), one or more data repository 242, an AIP 220 (e.g., a model orchestrator, a task orchestrator) running on a development service for developing, testing, and deploying one or more models 225 via the one or more interfaces 222, and generate the AIP 220 with one or more models 225.

In certain embodiments, AIP 220 is a highly configurable and modular infrastructure for dynamic model orchestration. For example, AIP consumes media streams from a variety of sensors (e.g., SAR (synthetic aperture radar) data, EO/IR (electro-optical/infrared) imagery, RF data, and/or FMV feeds) and applies one or more optional AI processing (e.g., containerized micro models including all necessary dependencies to run, such as libraries and drivers) to produce AI outputs. As an example, using diverse sensor inputs, AIP provides users at ground stations with a configuration interface for interacting with sensor data and managing one or more models and their connection to data through one or more open APIs. In some examples, AIP handles a variety of input formats, such as real-time streaming RTP/RTSP (Real-time Transport Protocol/ Real Time Streaming Protocol), NITF (National Imagery Transmission Format Standard), GeoTIFF (Geostationary Earth Orbit Tagged Image File Format), and/or, as FMV comes to space, MPEG-TS (MPEG transport stream) over UDP or from a file. In certain examples, as a configurable and interoperable system, AIP supports outputs in a variety of standard formats (e.g., open standard formats), such as XML, CoT, and GeoJSON, which enable sending data and insights downstream to other subsystems with little to no integration work required.

According to certain embodiments, AIP includes one or more tools to streamline and automate complex data engineering tasks. In some examples, AIP includes one or more Computer Vision (CV) Models. For example, AIP provides an intuitive interface and one or more tools for users to iterate on one or more CV models in support of objectives, such as space situational awareness, vessel/vehicle tracking, facility activity analysis, land use or construction, and/or others. In certain examples, AIP includes one or more RF Processing. For example, AIP supports one or more algorithms for automating the analysis of signals by signature. As an example, AIP supports pre-processing of the data, such as filtering incoming signals to reduce noise and/or splitting up waves into parts, for example, via Fourier transforms.

In some examples, AIP includes one or more image processing. For example, rendering EO or SAR collects into images (e.g., useful and/or useful, high-quality images) for analysis by humans or algorithms, all of which can be applied in AIP. As an example, performing the one or more image corrections at the sensor is an enabler for one or more fusion workflows onboard the spacecraft. Additionally, for example, as many AI models are trained on corrected data in machine learning environments, they require various corrected imagery at the point of collection. As an example, AIP includes an interface to one or more orthorectification models, which are for correcting optical distortions from sensor angles. For example, AIP includes an interface to one or more pan-sharpening models for creating a color image (e.g., high-resolution color image) out of one or more panchromatic and multispectral images. As an example, AIP includes an interface to one or more georegistration models for correcting geospatial information on the image to generate more precise coordinates. For example, AIP includes an interface to one or more image formation models for turning SAR data into images. As an example, AIP includes an interface to one or more tiling models for breaking a large image into one or more tiles (e.g., consumable chunks of pixels), for example, that a CV model can handle, and then handling the merging of detections and AI insights across one or more tiles back into a single view.

According to some embodiments, AIP includes adaptive runtime configuration. For example, AI pipelines are tailored to run one or more operation-specific and small, modular models ("micro models") as processors in parallel or with set dependencies on one or more other processors. As an example, AIP allows for switching out one or more algorithms as needed and optimizing on factors including quality of output, speed, and/or bandwidth. In some examples, importantly (e.g., critically), one or more micro models can be hot swapped in real-time without breaking model outputs and/or requiring massive software baseline changes.

According to certain embodiments, AIP includes a lightweight and/or modular interface that can conduct one or more compute processes (e.g., critical compute processes) in one or more remote or resource-constrained environments. For example, AIP runs on an organization's specialized satellite computing hardware and/or other, low-SWaP form-factors. As an example, this allows organizations to AI-compress data into "insight-first" streams to the earth, optimizing scarce bandwidth to ground stations (e.g., a computing device at a ground station). In certain examples, by running models on a minute form factor, AIP makes smart and/or autonomous sensor work possible. In some examples, deploying AIP at the point of use enables one or more AI detections (e.g., optimum quality AI detections) derived from the one or more sensor inputs (e.g., high-quality highest sensor inputs, highest quality sensor inputs).

According to some embodiments, AIP is applied to one or more use cases. In some examples, AIP is used for efficiently analysis in space. For example, with AIP deployed onboard spacecraft, one or more sophisticated AI models are rapidly integrated and swapped out as objectives evolve, feedback is received, and/or one or models are retrained. As an example, with low-latency decision-making possible at the edge, AIP reduces or removes the need to downlink before the next action.

In certain embodiments, AIP is used for tasking. As an example, satellite companies integrate their tasking and/or catalog API into a system (e.g., a data integration system), allowing users to task a constellation. For example, with AIP capturing one or more key parameters of customer requests, such as geographic area, time period, and/or the desired objects, a new data asset (e.g., a powerful new data asset) is generated that can be combined with the corresponding sensor data for advanced modeling and one or more new opportunities.

In some embodiments, AIP is used for sensor correlation. For example, AIP supports one or more multi-sensor models to fuse data across one or more diverse payloads. As an example, if a customer uses RF and EO collection, they can field one or more AI models with DMP, combining both modalities to achieve higher fidelity in detecting one or more entities of interest (e.g., military equipment). For example, the one or more fusion models are deployed to AIP and run onboard spacecraft.

In certain embodiments, AIP is used for command and control. As an example, AIP enables customers to achieve a sensor-to-actor workflow (e.g., a sensor-to-shooter workflow). For example, after sending a tasking from a ground station to a satellite with AIP, the software orchestrates the imaging, localization, and/or AI detection of a target, ultimately sending that target directly to terrestrial shooters, such as strike aircraft over secure protocols (e.g., JREAP-C, a U.S. military standard for transmitting tactical data messages over one or more long-distance networks, such as one or more satellite links).

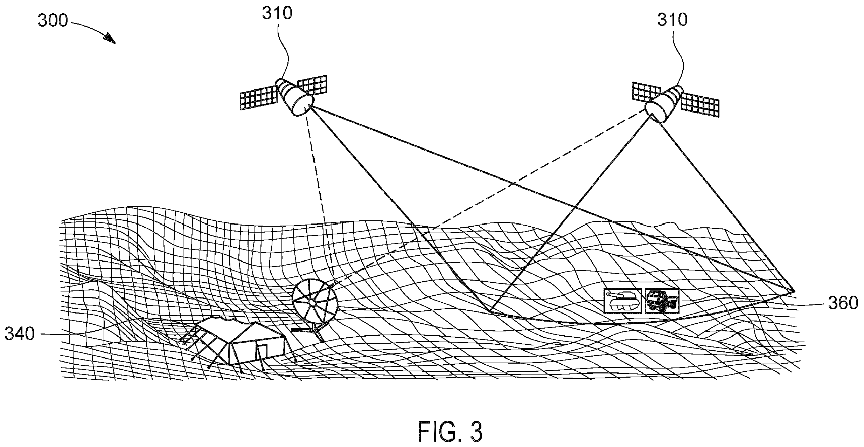

FIG. 3 is an illustrative AIP system 300 according to certain embodiments of the present disclosure. FIG. 3 is merely an example. One of ordinary skill in the art would recognize many variations, alternatives, and modifications. In some embodiments, the AIP system 300 includes one or more edge devices 310 and a DMP 340. In certain embodiments, the edge devices 310 run one or more AIPs onboard. In some examples, the edge devices 310 with the AIPs to conduct real-time AI/ML, for multi-sensor correlation and detection of objects 360. In certain embodiments, the DMP 340 is configured to develop, evaluate and deploy AIPs with interfaced one or more models to the edge device 310. In some embodiments, the edge devices 310 can be deployed to one or more satellites.

According to some embodiments, AIP orchestrates between the input sensor data and output feeds. For example, the "right" sides of AIP are utilizing open standard formats. As an example, AIP takes care of the decoding of the input data, orchestration between processors and artificial intelligence (AI) models, and then packages up the results into an open output format for downstream consumers.

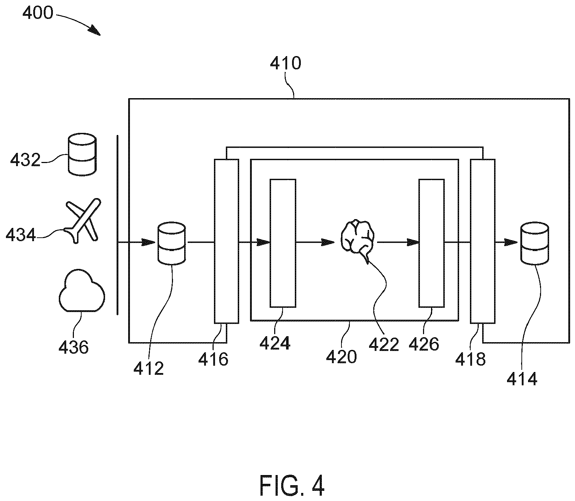

FIG. 4 is an illustrative AIP diagram according to certain embodiments of the present disclosure. FIG. 4 is merely an example. One of ordinary skill in the art would recognize many variations, alternatives, and modifications. According to some embodiments, AIP is a modular approach (e.g., a completely modular approach) to sensor processing. For example, AIP takes in sensor feeds (e.g., arbitrary sensor feeds, video) and then decodes the incoming sensor data (e.g., video stream) into consumable messages, so that one or more models (e.g., one or more 3rd party processing models) can interact with the sensor data (e.g., in a very simple way). As an example, an incoming real-time video stream with binary metadata is decoded into a simple frame (e.g., a picture) and corresponding metadata into a data package defined in an interface definition language (e.g., a platform-neutral data format, a language-neutral data format, protocol buffers (protobuf), protobuf over remote procedure call message) sent to the respective processors (e.g., computational models). As used herein, a processor refers to a computational model. In some embodiments, a processor refers to a computational model in execution.

In certain embodiments, AIP is also built in a way where it is light-weight (e.g., extremely light-weight) so AIP can be scaled up and/or down. For example, this allows a computing system using the AIP to deploy the same software on large servers (e.g., GPU (graphics processing units)) in a data center and/or deploy the same software to a small chip on a satellite. As an example, AIP is deployed in the cloud for video processing (e.g., large-scale video processing).

In some embodiments, AIP is deployed at the edge onto physical devices. For example, AIP is deployed onto one or more aircrafts (e.g., one or more unmanned aircrafts and/or one or more manned aircrafts), one or more vehicles, one or more boats, one or more processing plants. As an example, AIP is deployed to one or more satellites.

According to certain embodiments, the AIP system 400, for example, an AIP development and management platform (DMP) 400, includes an AIP 410, for example, running on an orchestrator service. In some embodiments, the AIP 410 includes an indication of a model pipeline 420 including one or more computational models, for example, running on a model service. In some embodiments, the AIP 410 is configured to process data into processed data (e.g., AI-ready data), to be stored and accessed from a data repository 412. In certain embodiments, the AIP 410 includes a first data repository 412 to receive and store input data (e.g., AI-ready data), a second repository 414 to receive and store model output data, a first API (e.g., data API) to receive sensor data, and a second API (e.g., inference API) to receive model output. In certain embodiments, the AIP 410 is configured to select one or more models based at least in part on one or more data characteristics, one or more processing characteristics and/or one or more user feedback. In certain examples, the processing characteristic may include a video frame extraction, an imaging processing, an object recognition, a decoding, an encoding, and other data processing characteristic. In some examples, the data characteristic may include an input data type (e.g., a sensor data type), an input data format (e.g., sensor data format), an input data volume, an input data range, an output data type, an output data format, and/or the like.

In some embodiments, the DMP 400 is configured to select two or more models to run in parallel in the model pipeline 420, where a first model's input has a first data format and a second model's input has a second data format. In certain examples, the first data format is the same as the second data format. In some examples, the first data format is different from the second data format. In certain embodiments, the DMP 400 is configured to select two or more models to run in sequence in the model pipeline 420, where a first model's output is an input to a second model. In some embodiments, the DMP 400 is configured to select two or more models running in parallel, where the two or more models generate respective model outputs provided to a third model. In certain embodiments, the third model has a software interface to receive results from the two or more models. In some embodiments, the model pipeline 420 includes an input vector 424 to receive data from the data API 416, one or more models 422, and an output vector 426 to output data to the inference API 418.

According to certain embodiments, the AIP system 400 is configured to receive historical data 432, sensor data 434 (e.g., real-time sensor data), and/or data from data repository 436 (e.g., security data repository) to select, develop, update, test, and/or evaluate the AIP 410 and/or the model pipeline 420. In some embodiments, the AIP 410 is configured to process the historical data 432, sensor data 434, and/or data from data repository 436 to generate AI-ready data, for example, data ready to be used with data API 416.

According to some embodiments, providing artificial intelligence (AI) and machine learning (ML) models with a steady stream of data is important (e.g., critical) to one or more models delivering one or more performant results. For example, the one or more models that can speedily consume and process data live "on the fly" allow any AI-derived insights to be used immediately, expediting the delivery of outcomes. In certain examples, in some settings, such as remote, air, space, edge, and/or other disconnected environments, it is important to quickly, consistently, and/or constantly transfer streaming data to the one or more models. For example, the streaming data include high-scale and/or noisy sensor data and/or full motion video (FMV). In some examples, this task is implemented by a system that is: (1) agnostic to one or more model frameworks; (2) modular-to allow for different configurations depending on the desired use case; and/or (3) lightweight and/or deployable where the data is being collected-so that the one or more models are developed and re-trained even when networks are unavailable. For example, the AIP accelerates model improvement and the efficacy of AI so one or more organizations can devote their resources to one or more other efforts, such as researching, developing, training, and/or refining one or more models.

According to some embodiments, one or more solutions are described. For example, AIP is integrated into or operated with a system (e.g., a data integration system). As an example, an AI Inference Platform (AIP) manages and orchestrates the dynamic consumption of data by models. For example, this portable solution helps provide useful AI outputs wherever fielded for live model development and re-training. As an example, the AIP serves as an AI orchestration engine for connecting data to one or more models and/or is responsible for running one or more models in real-time. For example, the AIP is used in conjunction with the AI development and management platform and/or the AI operations platform.

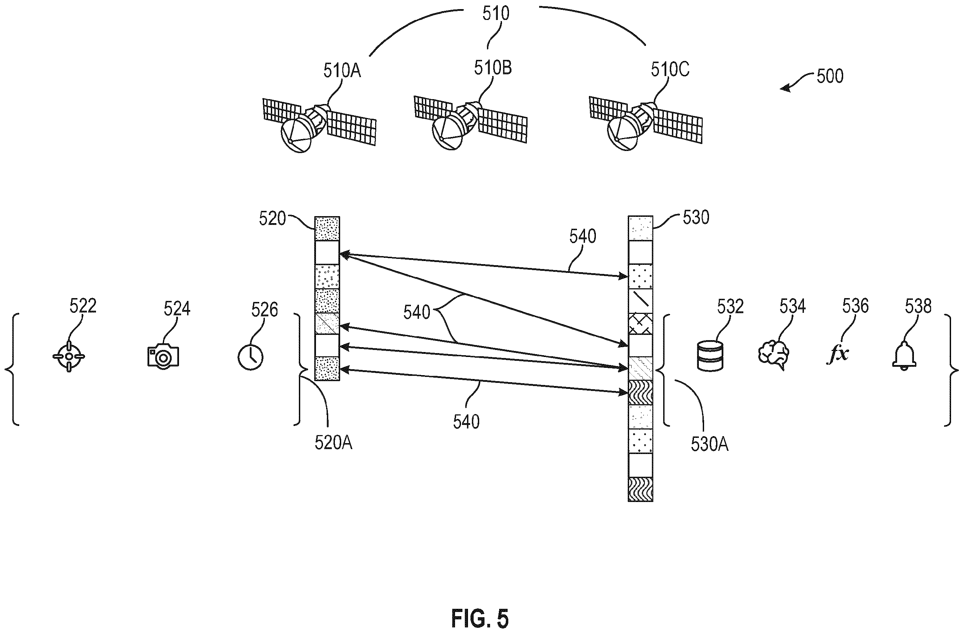

FIG. 5 is an illustrative device constellation system 500 (e.g., an AI meta-constellation system) according to certain embodiments of the present disclosure. FIG. 5 is merely an example. One of ordinary skill in the art would recognize many variations, alternatives, and modifications. In certain embodiments, the device constellation system 500 includes one or more edge devices 510, a collection request queue 520, and a monitor request queue 530 (e.g., an algorithm request queue). In some embodiments, FIG. 5 shows two or more queues (e.g., dual queues) used in a device constellation system, for example, a collection request queue (e.g., a global collection queue) and an algorithm request queue (e.g., an AI monitoring request queue).

According to certain embodiments, the one or more edge devices 510 includes a first edge device 510A (e.g., a computing device disposed on or integrated with a satellite, a satellite, a vessel, etc.), a second edge device 510B (e.g., a computing device disposed on or integrated with a satellite, a satellite, a vessel, etc.), and a third edge device 510C (e.g., a computing device disposed on or integrated with a satellite, a satellite, a vessel, etc.). In some embodiments, one or more of the edge devices 510 includes an AIP, for example, for receiving one or more requests and/or transmitting data. In certain embodiments, each edge device 510 includes an AIP, for example, for receiving one or more requests and/or transmitting data. In some embodiments, the device constellation system 500 includes two or more request queues storing one or more requests to the one or more edge devices 510. In certain embodiments, the queues are stored or accessible via one or more edge devices 510. In some embodiments, the collection request queue 520 includes one or more collection requests 520A for sensor data collection. In certain embodiments, the monitor request queue 530 includes one or more monitoring requests 530A for monitoring and processing requests.

According to some embodiments, a collection request 520A includes data for one or more collection parameters including, for example, one or more location and/or field-of-view parameters 522, one or more sensor parameters 524, one or more timing parameters 526 (e.g., pass timing and/or revisit), and/or the like. In certain embodiments, the one or more location parameters 522 include one or more of a geographic coordinate parameter, a latitude parameter, a longitudinal parameter, an altitude parameter, a geohash parameter, a GPS (global-positioning-system) parameter, and/or the like. In some embodiments, the one or more field-of-view parameters 522 include one or more location parameters and one or more of an angle, an angle range, an area, and/or the like. In certain embodiments, the one or more sensor parameters 524 include a type of sensor, a feature of sensor, a configuration of sensor, a sensing range, a sensing angle, a sensing time, and/or the like. In some examples, the sensor is an image sensor, and the sensor parameters include a zooming parameter, a resolution parameter, a frame rate parameter, a gain parameter, a binning parameter, an image format parameter, and/or the like. In certain examples, the sensor includes an acoustic sensor, a transducer, an ultrasonic sensor, an infrared sensor, a hyperspectral sensor, and/or the like. In some embodiments, the one or more timing parameters 526 includes one or more of a specific time, a specific repeated time, a time range (e.g., a time window) from a beginning time to an end time, a time range periodically (e.g., daily, weekly, monthly, etc.), and/or the like.

According to certain embodiments, a monitoring request 530A includes data for one or more monitoring parameters including, for example, contextual data 532, one or more perception models 534, one or more fusion functions/activity metrics 536, one or more target criteria 538 (e.g., downlink criteria), and/or the like. In some embodiments, the contextual data 532 is stored in one or more data repositories. In certain embodiments, the contextual data 532 includes historical sensor data, model parameters, object parameters, and/or the like. In some embodiments, the one or more perception models 534 include one or more models for identifying and/or monitoring one or more target objects. In certain embodiments, the one or more perception models 534 include one or more computer-vision models for identifying objects in images and/or videos. In some embodiments, the one or more fusion functions 536 include one or more functions on sensor data and/or processed sensor data. In certain embodiments, the one or more activity metrics 536 include one or more movement metrics, movement pattern metrics, and/or the like. In some embodiment, the one or more target criteria 538 include one or more criteria associated with one or more target characteristics. In certain embodiments, the one or more target characteristics include a type of object, a size of object, a color of object, a shape of object, a feature of object, and/or the like.

According to some embodiments, the device constellation system 500 sends and combines one or more requests in the one or more queues 520, 530 to one or more selected edge devices 510. In certain embodiments, a collection request 520A in the collection request queue 520 is associated with a monitor request 530A in the monitor request queue 530 with one or more correlations 540 (e.g., pairing). In some embodiments, a collection request 520A is associated with one or more sensor parameters for a target object and a monitor request 530A is associated with one or more perception modes for the target object.

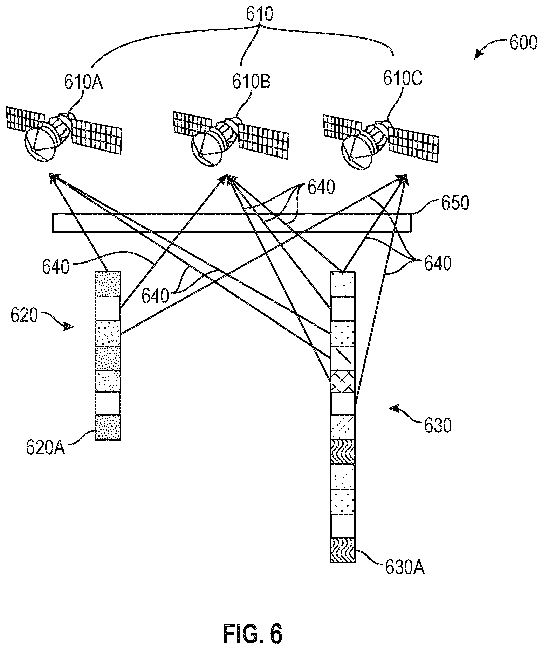

FIG. 6 is an illustrative device constellation system 600 (e.g., an AI meta-constellation system) according to certain embodiments of the present disclosure. FIG. 6 is merely an example. One of ordinary skill in the art would recognize many variations, alternatives, and modifications. In certain embodiments, the device constellation system 600 includes one or more edge devices 610, a collection request queue 620, a monitor request queue 630 (e.g., an algorithm request queue), and a constellation engine 650 (e.g., an optimization engine). In some embodiments, the device constellation system 600 provides a way for efficient use of edge devices (e.g., edge devices disposed on satellites).

According to certain embodiments, the one or more edge devices 610 includes a first edge device 610A (e.g., a computing device disposed on or integrated with a satellite, a satellite, a vessel, etc.), a second edge device 610B (e.g., a computing device disposed on or integrated with a satellite, a satellite, a vessel, etc.), and a third edge device 610C (e.g., a computing device disposed on or integrated with a satellite, a satellite, a vessel, etc.). In some embodiments, one or more of the edge devices 610 includes an AIP, for example, for receiving one or more requests and/or transmitting data. In certain embodiments, each edge device 610 includes an AIP, for example, for receiving one or more requests and/or transmitting data. In some embodiments, the device constellation system 600 includes two or more request queues storing one or more requests to the one or more edge devices 610. In certain embodiments, the queues are stored or accessible via one or more edge devices 610. In some embodiments, the collection request queue 620 includes one or more collection requests 620A for sensor data collection. In certain embodiments, the monitor request queue 630 includes one or more monitoring requests 630A for monitoring and processing requests.

According to some embodiments, a collection request 620A includes data for one or more collection parameters including, for example, one or more location and/or field-of-view parameters, one or more sensor parameters, one or more timing parameters (e.g., pass timing and/or revisit), and/or the like. In certain embodiments, the one or more location parameters include one or more of a geographic coordinate parameter, a latitude parameter, a longitudinal parameter, an altitude parameter, a geohash parameter, a GPS (global-positioning-system) parameter, and/or the like. In some embodiments, the one or more field-of-view parameters include one or more location parameters and one or more of an angle, an angle range, an area, and/or the like. In certain embodiments, the one or more sensor parameters include a type of sensor, a feature of sensor, a configuration of sensor, a sensing range, a sensing angle, a sensing time, and/or the like. In some examples, the sensor is an image sensor, and the sensor parameters include a zooming parameter, a resolution parameter, a frame rate parameter, a gain parameter, a binning parameter, an image format parameter, and/or the like. In certain examples, the sensor includes an acoustic sensor, a transducer, an ultrasonic sensor, an infrared sensor, a hyperspectral sensor, and/or the like. In some embodiments, the one or more timing parameters includes one or more of a specific time, a specific repeated time, a time range from a beginning time to an end time, a time range periodically (e.g., daily, weekly, monthly, etc.), and/or the like.

According to certain embodiments, a monitoring request 630A includes data for one or more monitoring parameters including, for example, contextual data, one or more perception models, one or more fusion functions/activity metrics, one or more target criteria (e.g., downlink criteria), and/or the like. In some embodiments, the contextual data is stored in one or more data repositories. In certain embodiments, the contextual data includes historical sensor data, model parameters, object parameters, and/or the like. In some embodiments, the one or more perception models include one or more models for identifying and/or monitoring one or more target objects. In certain embodiments, the one or more perception models include one or more computer-vision models for identifying objects in images and/or videos. In some embodiments, the one or more fusion functions include one or more functions on sensor data and/or processed sensor data. In certain embodiments, the one or more activity metrics include one or more movement metrics, movement pattern metrics, and/or the like. In some embodiment, the one or more target criteria include one or more criteria associated with one or more target characteristics. In certain embodiments, the one or more target characteristics include a type of object, a size of object, a color of object, a shape of object, a feature of object, and/or the like.

According to some embodiments, the device constellation system 600 sends and combines one or more requests 640 in the one or more queues 620, 630 to one or more selected edge devices 610. In certain embodiments, a collection request 620A in the collection request queue 620 is associated with a monitor request 630A in the monitor request queue 630 with one or more correlations. In some embodiments, a collection request 620A is associated with one or more sensor parameters for a target object and a monitor request 630A is associated with one or more perception modes for the target object.

According to certain embodiments, the constellation engine 650 generates or assigns one or more tasks 640 including one or more collection requests 620A from the collection request queue 620 and one or more monitor requests 630A from the monitor request queue 630. In some embodiments, the constellation engine 650 selects an edge device 610 for a task 640, and send the task 640 to the edge device 610. In certain embodiments, the constellation engine 650 selects the edge device 610 based at least in part upon the task 640. In some embodiments, the constellation engine 650 selects the edge device 610 based at least in part upon one or more sensor parameters in the task 640. In certain embodiments, the constellation engine 650 selects the edge device 610 based at least in part upon one or more location parameters and/or field-of-view parameters in the task 640. In some embodiments, the constellation engine 650 selects the edge device 610 based at least in part upon one or more timing parameters in the task 640. In certain embodiments, the constellation engine 650 selects the edge device 610 based at least in part upon one or more perception model parameters in the task 640. In certain embodiments, the constellation engine 650 selects the edge device 610 based at least in part upon one or more fusion functions in the task 640. In some embodiments, the constellation engine 650 selects the edge device 610 based at least in part upon one or more activity metrics in the task 640. In certain embodiments, the constellation engine 650 selects the edge device 610 based at least in part upon one or more target criteria in the task 640.

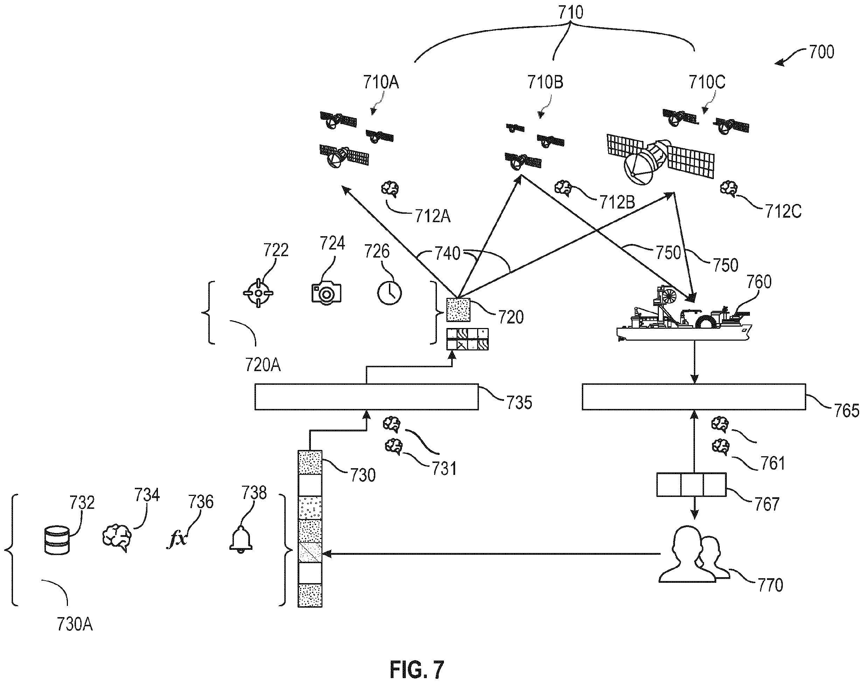

FIG. 7 is an illustrative device constellation system 700 (e.g., an AI meta-constellation system) according to certain embodiments of the present disclosure. FIG. 7 is merely an example. One of ordinary skill in the art would recognize many variations, alternatives, and modifications. In certain embodiments, the device constellation system 700 includes one or more edge device constellations 710, a collection request queue 720, a monitor request queue 730 (e.g., an algorithm request queue), a constellation engine 735, and an operational engine 765. In some embodiments, the device constellation system 700 provides a way for efficient use of edge devices (e.g., edge devices disposed on satellites).

According to certain embodiments, the one or more edge device constellations 710 includes a first edge device constellation 710A (e.g., one or more edge devices in a group, one or more computing devices disposed on or integrated with one or more satellites, etc.), a second edge device constellation 710B (e.g., one or more edge devices in a group, one or more computing devices disposed on or integrated with one or more satellites, etc.), and a third edge device 710C (e.g., one or more edge devices in a group, one or more computing devices disposed on or integrated with one or more satellites, etc.). In some embodiments, one or more of the edge device constellations 710 include an AIP, for example, for receiving one or more requests and/or transmitting data. In certain embodiments, each edge device constellation 710 includes a corresponding AIP 712A, 712B, 712C, for example, for receiving one or more requests and/or transmitting data. In some embodiments, the device constellation system 700 includes two or more request queues storing one or more requests to the one or more edge device constellations 710. In certain embodiments, the queues are stored or accessible via one or more edge device constellations 710. In some embodiments, the collection request queue 720 includes one or more collection requests 720A for sensor data collection. In certain embodiments, the monitor request queue 730 includes one or more monitoring requests 730A for monitoring and processing requests.

According to some embodiments, a collection request 720A includes data for one or more collection parameters including, for example, one or more location and/or field-of-view parameters 722, one or more sensor parameters 724, one or more timing parameters 726 (e.g., pass timing and/or revisit), and/or the like. In certain embodiments, the one or more location parameters 722 include one or more of a geographic coordinate parameter, a latitude parameter, a longitudinal parameter, an altitude parameter, a geohash parameter, a GPS (global-positioning-system) parameter, and/or the like. In some embodiments, the one or more field-of-view parameters include one or more location parameters and one or more of an angle, an angle range, an area, and/or the like. In certain embodiments, the one or more sensor parameters 724 include a type of sensor, a feature of sensor, a configuration of sensor, a sensing range, a sensing angle, a sensing time, and/or the like. In some examples, the sensor is an image sensor, and the sensor parameters include a zooming parameter, a resolution parameter, a frame rate parameter, a gain parameter, a binning parameter, an image format parameter, and/or the like. In certain examples, the sensor includes an acoustic sensor, a transducer, an ultrasonic sensor, an infrared sensor, a hyperspectral sensor, and/or the like. In some embodiments, the one or more timing parameters 726 include one or more of a specific time, a specific repeated time, a time range from a beginning time to an end time, a time range periodically (e.g., daily, weekly, monthly, etc.), and/or the like.

According to certain embodiments, a monitoring request 730A includes data for one or more monitoring parameters including, for example, contextual data 732, one or more perception models 734, one or more fusion functions/activity metrics 736, one or more target criteria 738 (e.g., downlink criteria), and/or the like. In some embodiments, the contextual data 732 is stored in one or more data repositories. In certain embodiments, the contextual data includes historical sensor data, model parameters, object parameters, and/or the like. In some embodiments, the one or more perception models 734 include one or more models for identifying and/or monitoring one or more target objects. In certain embodiments, the one or more perception models include one or more computer-vision models for identifying objects in images and/or videos. In some embodiments, the one or more fusion functions 736 include one or more functions on sensor data and/or processed sensor data. In certain embodiments, the one or more activity metrics 736 include one or more movement metrics, movement pattern metrics, and/or the like. In some embodiment, the one or more target criteria 738 include one or more criteria associated with one or more target characteristics. In certain embodiments, the one or more target characteristics 738 include a type of object, a size of object, a color of object, a shape of object, a feature of object, and/or the like.

According to certain embodiments, the constellation engine 735 receives one or more requests 730A in the monitoring queue 730, and decompose the request into one or more tasks 740, which combines one or more collection requests 720A from the collection request queue 720 and corresponding models. In some embodiments, the constellation engine 735 selects an edge device 710 for a task 740, and send the task 740 to the edge device and/or edge device constellation 710. In certain embodiments, the constellation engine 735 selects the edge device and/or edge device constellation 710 based at least in part upon the task 740. In some embodiments, the constellation engine 735 selects the edge device 710 based at least in part upon one or more sensor parameters in the task 740. In certain embodiments, the constellation engine 735 selects the edge device and/or edge device constellation 710 based at least in part upon one or more location parameters and/or field-of-view parameters in the task 740. In some embodiments, the constellation engine 735 selects the edge device and/or edge device constellation 710 based at least in part upon one or more timing parameters in the task 740. In certain embodiments, the constellation engine 735 selects the edge device and/or edge device constellation 710 based at least in part upon one or more perception model parameters in the task 740. In certain embodiments, the constellation engine 735 selects the edge device and/or edge device constellation 710 based at least in part upon one or more fusion functions in the task 740. In some embodiments, the constellation engine 735 selects the edge device and/or edge device constellation 710 based at least in part upon one or more activity metrics in the task 740. In certain embodiments, the constellation engine 735 selects the edge device and/or edge device constellation 710 based at least in part upon one or more target criteria in the task 740.

According to some embodiments, the device constellation system 700 is configured to select one or more edge devices (e.g., a plurality of edge devices) from one or more constellations (e.g., a plurality of constellations). In some examples, each of the one or more constellations is owned by and/or operated by an entity (e.g., a government organization, a company, an industry organization, etc.). As an example, two constellations are owned by and/or operated by two different entities. In certain examples, a meta-constellation is formed including one or more edge devices from one or more constellations owned by and/or operated by various entities. For example, the system 700 is configured to select multiple edge devices from a plurality of constellations, and each constellation of the plurality of constellations is owned by and/or operated by an entity (e.g., a government organization, a company, an industry organization, etc.). As an example, some selected multiple edge devices belong to a constellation owned by and/or operated by an entity, and other selected multiple edge devices belong to a different constellation owned by and/or operated by a different entity. In some examples, the system is configured to select one or more edge devices based on capability, eligibility, and/or availability of the corresponding edge device. For example, an edge device is a satellite that includes one or more sensors, where the one or more sensors are also referred to as orbit sensors. As an example, an edge device includes one or more sensors in the space. For example, an edge device is selected based on a viewing angle of an imaging sensor on the edge device. As an example, an edge device is selected based on its location in the water. In some examples, the system selects the edge device based upon one or more sensors and/or one or more models. For example, an edge device is selected to use a specific model to process data.

According to certain embodiments, the system 700 and/or the constellation engine is configured to assign the one or more tasks 740 to the one or more selected edge devices and/or edge device constellations 710. In some embodiments, the system 700 and/or the constellation engine is configured to assign the one or more tasks 740 to the one or more selected edge devices and/or edge device constellations 710 using one or more models 731 (e.g., an optimization model, a security model etc.). According to some embodiments, the one or more selected edge devices are configured to perform the one or more assigned tasks to generate data 750. In some examples, the one or more edge devices are configured to collect data during the performance of the one or more assigned tasks. In certain examples, the one or more edge devices are configured to process the collected data. In some examples, the edge device is configured to generate one or more insights by processing the data collected by one or more sensors on the edge device and/or data collected by one or more sensors on one or more other edge devices. In certain examples, the generated data 760 by the one or more selected edge devices includes the collected data, the processed data, the one or more insights, fused processed data (e.g., fused AI data), and/or a combination thereof. As an example, an edge device is assigned with a task of monitoring a space area for two weeks and is configured to filter the monitoring data (e.g., removing certain data). For example, an edge device is assigned with a task of detecting wildfire and is configured to process data collected from various sensors on the edge device and transmit an insight of whether wildfire is detected.

According to some embodiments, the system 700 and/or the constellation engine 735 is configured to request a source edge device to transmit data (e.g., collected data and/or processed data) to a destination edge device. In some examples, the destination edge device is configured to process data from the source edge device. In certain examples, the system is configured to move more complex processing to the one or more edge devices. In certain examples, two or more edge devices are configured to transmit data to a selected edge device for data processing.

According to certain embodiments, the system 700 and/or the operation engine 765 are configured to generate one or more actions 767 using one or more models 761 (e.g., a planning model, a scoring model, etc.). In some embodiments, the actions 767 include one or more actionable insights. In certain embodiments, the actions are provided to one or more users 770 (e.g., operational users).

According to some embodiments, FIG. 7 shows certain aspects of a device constellation system 700 (e.g., an AI meta-constellation system), for example, using deep sensing and/or associated with satellite marketplace (e.g., efficient satellite marketplace). In some examples, the device constellation system 700 combines one or more heterogenous satellite constellations and/or leveraging AI to give users actionable insights from one or more overhead sensors. In certain examples, the device constellation system compiles one or more user AI requests into one or more optimized collection requests across many specialized sensors and/or uploads one or more tailored AI models to edge devices (e.g., satellites). As an example, one or more AI insights are fused and returned to users for operational planning and/or execution via an operational engine 765.

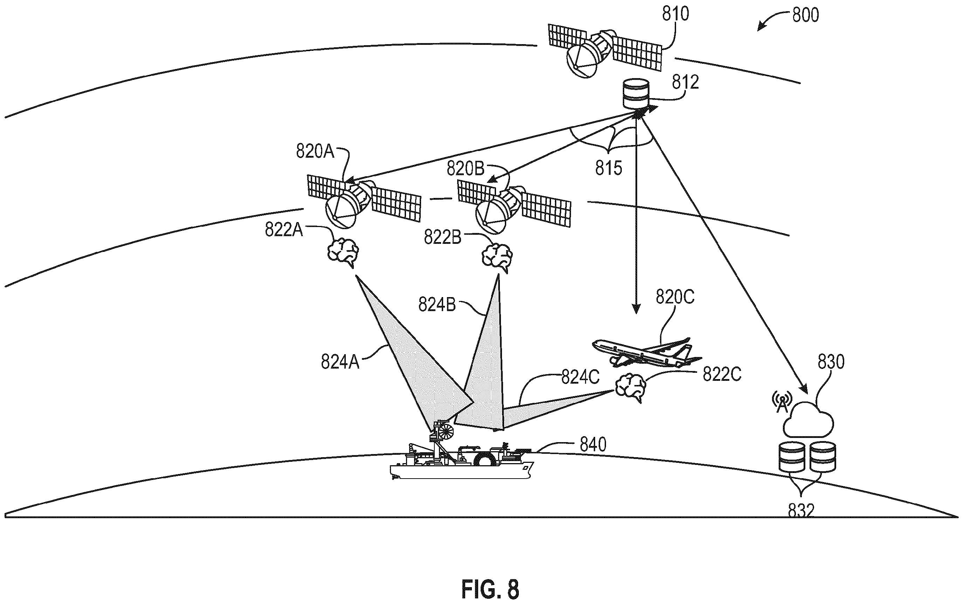

FIG. 8 is an illustrative device constellation environment 800 (e.g., an AI meta-constellation environment) according to certain embodiments of the present disclosure. FIG. 8 is merely an example. One of ordinary skill in the art would recognize many variations, alternatives, and modifications. In certain embodiments, the device constellation environment 800 includes a controlling edge device 810 with an associated data center 812, three edge devices 820A, 820B, 820C with associated respective AIP 822A, 822B, 822C, a controlling device 830 with one or more data repositories 832, and a target object 840.

According to certain embodiments, the controlling edge device 810 (e.g., a space data center) includes a constellation engine to receive a request (e.g., monitoring a water vessel for two weeks) from the controlling device 830 (e.g., a ground station, a cloud center). In some embodiments, the controlling edge device 810 is configured to decompose the request to one or more tasks 815 and assigns the one or more tasks 815 to respective edge devices 820A, 820B, 820C. In some embodiments, the controlling edge device 810 is configured to decompose the request to one or more tasks 815 and assign the one or more tasks 815 to respective edge devices 820A, 820B, 820C based on respective field-of-view 824A, 824B, 824C. In certain embodiments, the edge devices 820A, 820B, 820C are disposed on or integrated with various moving objects. In some examples, the first edge device 820A and/or the second edge device 820B include one or more computing devices disposed on or integrated with one or more satellites. In certain examples, the third edge device 820C includes one or more computing devices disposed on or integrated with one or more planes.

According to some embodiments, the controlling edge device 810 receives data (e.g., sensor data, processed sensor data, insights, etc.) from the edge devices 820A, 820B, 820C, for example, via the AIPs 822A, 822B, 822C, and generate data (e.g., insights, processed sensor data, fused target object data, fused AI data, etc.) based at least in part on the received data, for example, using one or more models. In certain embodiments, the controlling edge device 810 transmits the generated data to the controlling device 830, for example, to take additional actions based on the generated data. In some embodiments, FIG. 8 shows distributed AI operations, sensing, and/or cross-cueing related to device constellation systems (e.g., AI meta-constellation system).

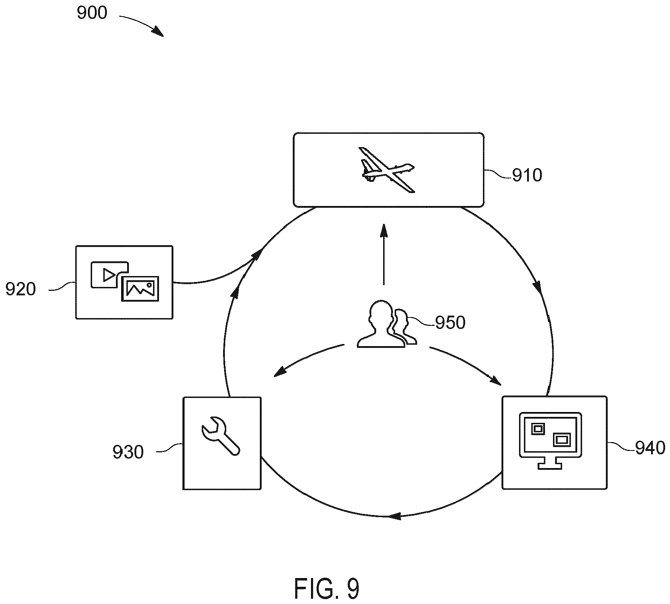

FIG. 9 is an illustrative AIP system 900 (e.g., model orchestrators, task moderators), for example, used in a device constellation system, according to certain embodiments of the present disclosure. FIG. 9 is merely an example. One of ordinary skill in the art would recognize many variations, alternatives, and modifications. In some embodiments, the AIP system 900 includes or interfaces with one or more AIPs 910 running on edge devices, one or more data feed 920 (e.g., video, imagery, etc.), a data management platform 930, one or more decision-making applications 940, and one or more feedback mechanism 950. In some embodiments, the edge devices, by running the AIPs 910, can perform real-time AI/ML, on the edge. In certain embodiments, the one or more feedback mechanism 950 is via software interface, user interface, and/or other input mechanism and communication mechanism. As used herein, in some embodiments, feedback includes one or more of commands, controls, results, and messages. In some embodiments, the AIP system 900 can update, retrain, select, and/or delete one or more models based on the feedback. In certain embodiments, the decision-making applications 940 can provide feedback to the AIPs 910. In some embodiments, the decision-making applications 940 can provide feedback to the data management platform 930.

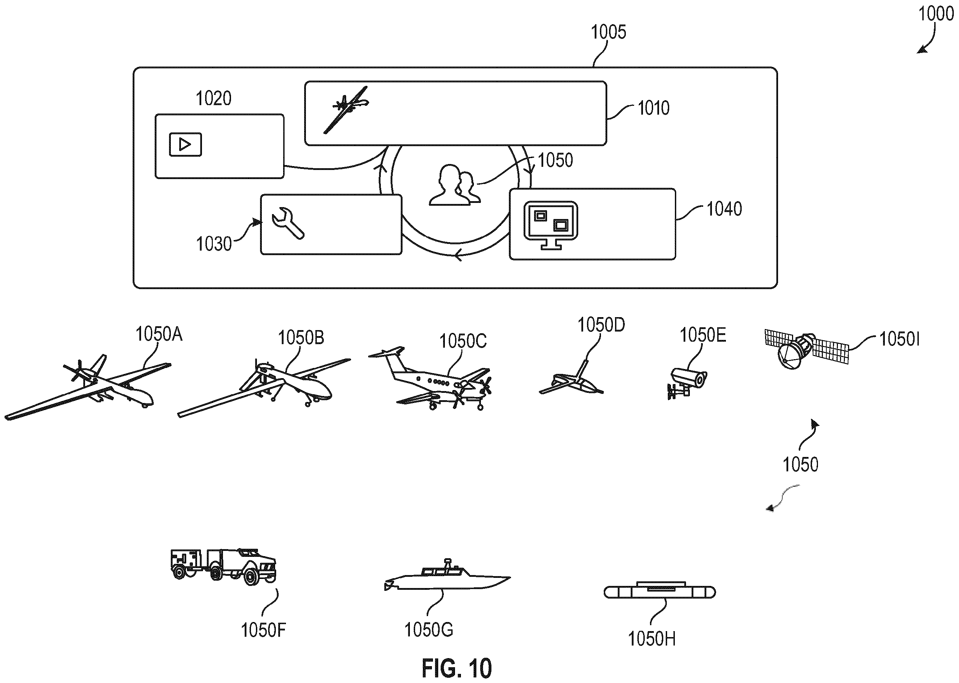

FIG. 10 is an illustrative constellation environment 1000 according to certain embodiments of the present disclosure. FIG. 10 is merely an example. One of ordinary skill in the art would recognize many variations, alternatives, and modifications. In some embodiments, the constellation environments include one or more AIPs 1005 and one or more edge devices 1050. In certain embodiments, the AIP 1015 includes or interfaces with one or more data feed 1020 (e.g., video, imagery, etc.), a data management platform 1030, one or more decision-making applications 1040, and one or more feedback mechanism 1050. In some embodiments, the constellation environment 1000 includes a plurality of edge devices 1050 including, for example, edge device 1050A, 1050B, 1050C, 1050D, 1050E, 1050F, 1050G, 1050H, 1050I. In certain embodiments, one or more of the edge devices 1050 have one or more respective AIP 1005.

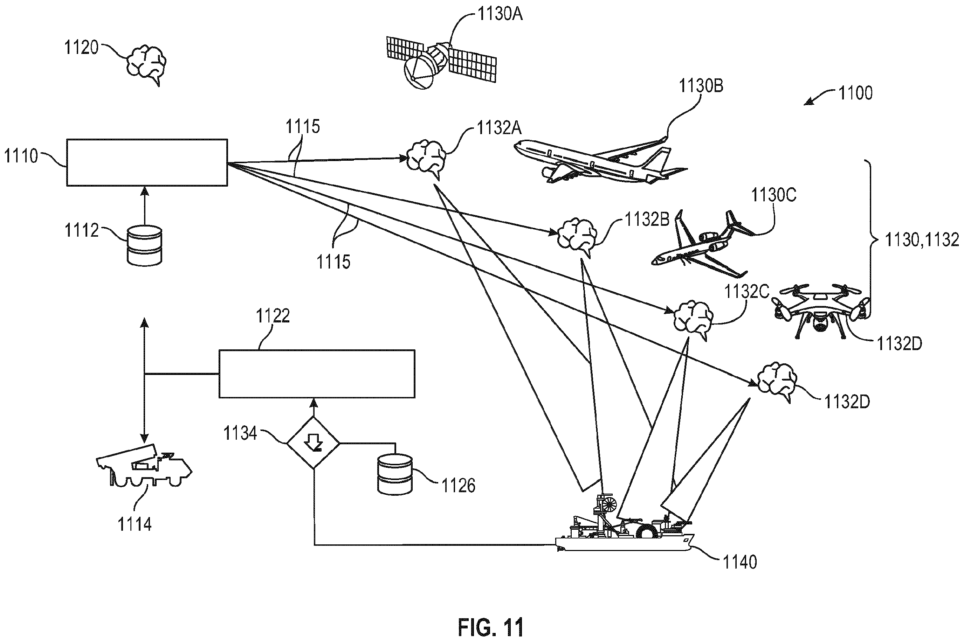

FIG. 11 shows an example device constellation system 1100 according to certain embodiments of the present disclosure. FIG. 11 is merely an example. One of ordinary skill in the art would recognize many variations, alternatives, and modifications. In some embodiments, the device constellation system 1100 (e.g., a meta-constellation system, an AI meta-constellation system) includes a development system 1110 (e.g., DMP) with associated data repository 1112 (e.g., storing historical sensor data, historical insight data, AIP configurations, AIP parameters, etc.) for generating and/or deploying one or more AIPs 1120, a model management system 1122 with associated deployment mechanism 1134 (e.g., a communication channel) and associated data repository 1126 (e.g., storing one or more models, one or more model parameters), one or more controllers 1114 to deploy AIPs 1120 with associated one or more models, one or more edge device 1130 with associated AIPs 1132 (e.g., AIP 1132A, AIP 1132B, AIP 1132C, AIP 1132D), and a target object 1140.

According to some embodiments, the device constellation system 1100 (e.g., a meta-constellation system, an AI meta-constellation system) develops and deploys (e.g., fields) one or more models (e.g., AI/ML (machine learning) models) to edge devices 1130 (e.g., customers with a system (e.g., a data use system)). In certain examples, the device constellation system 1100 integrates, models, and/or suggests one or more collection requests, for example, using the model management system 1122 (e.g., the data use system). In some examples, the device constellation system (e.g., meta-constellation system) analyzes in space with one or more AIPs 1132. In certain examples, the device constellation system 1100 fuses data across one or more edge devices 1130 (e.g., diverse space-based sensors) using the AIPs 1132. In some examples, the device constellation system (e.g., meta-constellation system, AI meta-constellation system) implements one or more sensor-to-actor (e.g., sensor-to-shooter) workflows using the edge devices 1130 (e.g., incorporated with the data use system) and the AIPs 1132. In certain embodiments, the device constellation system 1100 receives a request of monitoring the target object 1140 and assigns one or more respective tasks to monitor the target object 1140.

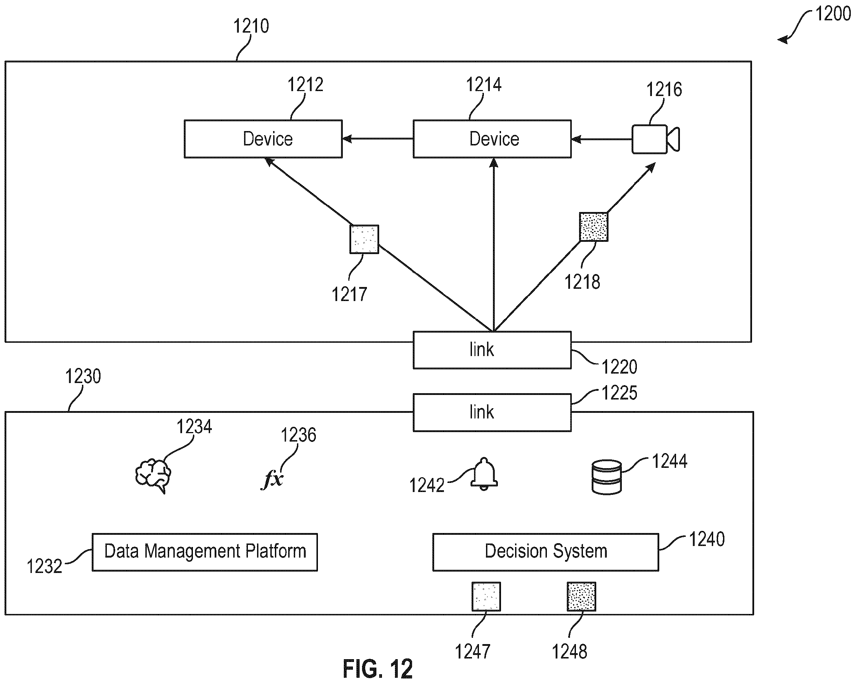

FIG. 12 is an example device constellation environment 1200 (e.g., an AI meta-constellation environment) according to certain embodiments of the present application. FIG. 12 is merely an example. One of ordinary skill in the art would recognize many variations, alternatives, and modifications. In some embodiments, the device constellation system 1200 includes an example request pipeline, for example, via links (e.g., uplinks, from controlling devices to edge devices) 1220 and 1225. In certain embodiments, the device constellation system environment 1200 conducts dynamic model (e.g., AI) deployment. In some embodiments, the device constellation environment 1200 includes one or more edge devices 1210 and one or more controlling devices 1230 (e.g., a ground station). In certain embodiments, the one or more edge devices 1210 include a sensor device 1216, a device 1214 (e.g., with associated AIP), and a device AIP 1212 (e.g., a passive device, with associated AIP). In some embodiments, the device 1212 receives a monitoring request 1217, for example, such that the associated edge device can run one or more models to meet the monitoring request. In certain embodiments, the sensor device 1216 includes one or more sensors and receives a collection request 1218, to start collecting data according to the collection request 1218.

According to some embodiments, the controlling devices 1230 (e.g., controlling edge devices) include a data management platform 1232 and a decision system 1240. In certain embodiments, the data management platform 1232 includes one or more models 1234, 1236 to be deployed via the links 1220, 1225 to the devices 1210. In certain embodiments, the decision system 1240 uses one or more models 1242 and contextual data stored in the data repository 1244 to generate the monitoring request 1217 and/or the collection request 1218.

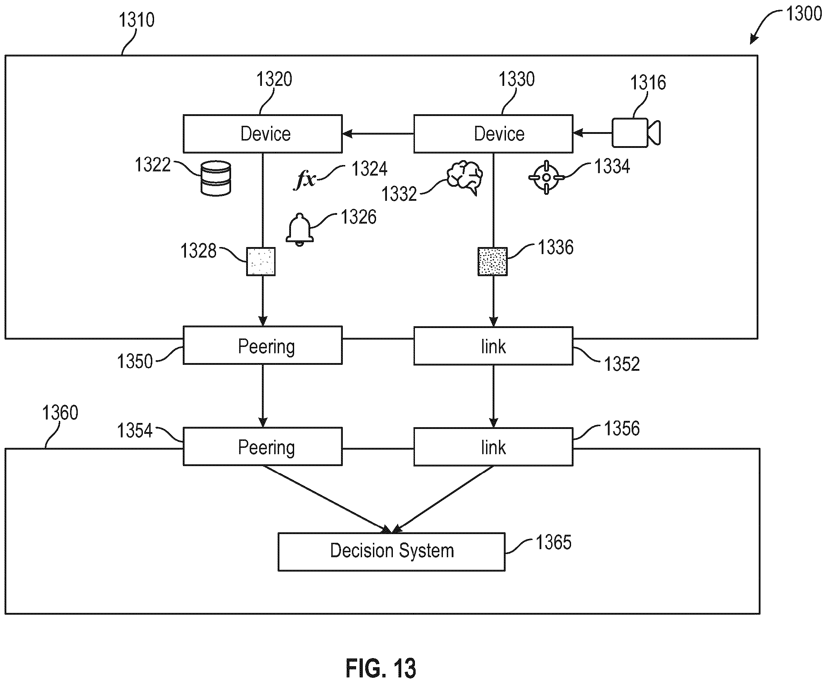

FIG. 13 is an example device constellation environment 1300 (e.g., an AI meta-constellation environment) according to certain embodiments of the present application. FIG. 13 is merely an example. One of ordinary skill in the art would recognize many variations, alternatives, and modifications. In some embodiments, the device constellation system 1300 includes an example inference pipeline, for example, via links (e.g., downlinks, from edge devices to controlling devices) 1352 and 1356. In certain embodiments, the inference pipeline includes passive path and/or active path. In some embodiments, the device constellation environment 1300 includes one or more edge devices 1310 and one or more controlling devices 1360. In certain embodiments, the edge devices 1310 include one or more edge devices 1316, 1320, 1330, each with or without an associated AIP. In some embodiments, the edge device 1316 includes one or more sensors to collect sensor data.

In certain embodiments, the edge device 1330 receives the sensor data or processed sensor data from the edge device 1316, for example, via an AIP, and processes the received data with one or more models 1332, 1334 (e.g., perception models, georegistration models) to generate one or more collection results 1336. In some embodiments, the edge device 1330 sends data (e.g., collection results) to the edge device 1320 for further processing. In certain embodiments, the edge device 1320 applies one or more models 1324, 1326 (e.g., fusion functions, activity metric models, target criteria, etc.) to the data received from the edge device 1330 and data 1322 (e.g., contextual data). In certain embodiments, the edge device 1320 is configured to generate one or more monitoring results 1328 (e.g., insights).

According to some embodiments, the one or more edge devices 1310 transmit results to the one or more controlling devices 1360, which includes a decision system 1365. In certain embodiments, the collection results 1336 are transmitted to the decision system 1365. In some embodiments, the monitoring results are transmitted to the decision system 1365.

According to certain embodiments, raw imagery data from a satellite requires various degrees of processing to make it suitable for analysis. In some embodiments, the stages of processing include multiple levels (e.g., four levels). For example, the lowest level image data (e.g., L0 imagery) comprises raw unprocessed images from the satellite's sensor. In some examples, a scene includes a sequence of raw images (e.g., frames) taken over a particular area of interest. In certain examples, when satellite flies over target area, it takes N photos (e.g., frames) every period of time, for example, every M milliseconds (e.g., 1 ms, 10 ms). In some embodiments, the consecutive frames have an expected overlap based on a consistent (e.g., constant) delay between frames (e.g., frames (M), photos image data), for example, the frames taken in sequence, and satellite velocity (e.g., constant satellite velocity).

In certain examples, the exact overlap between two consecutive frames is not known a priori due to variations in the satellite's position, velocity and/or orientation. In some examples, the systems and methods of the present disclosure target type of satellites that have single channel electro-optical (EO) sensor overlaid with a set of band-filters, for example, red filter, green filter, and blue filter. In certain examples, due to physical limitations of band-filters, there is a blind zone (e.g., no-intensity-value stripe between consecutive bands) on resulting images. In certain embodiments, a band refers to a wavelength range (e.g., a wavelength range for red, a wavelength range for green, a wavelength range for blue).

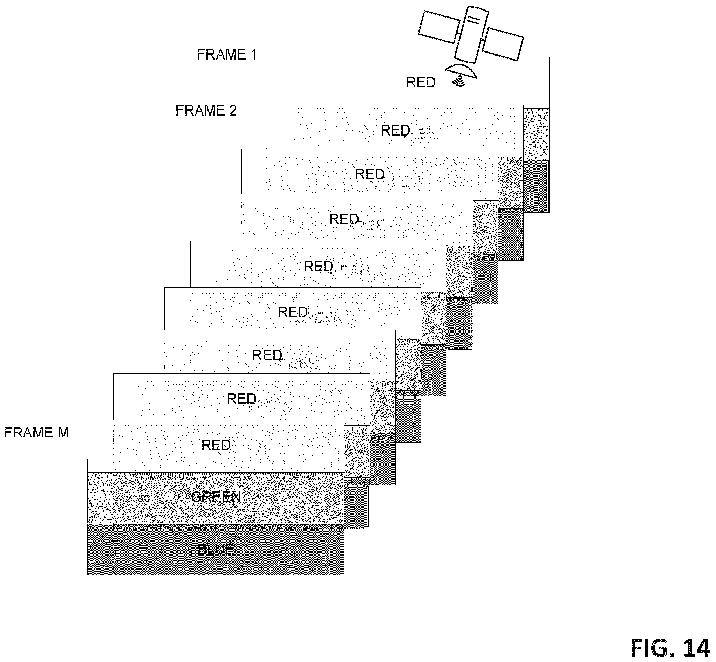

FIG. 14 is an illustrative example of frames (e.g., consecutive M frames) with bands. FIG. 14 is merely an example. One of ordinary skill in the art would recognize many variations, alternatives, and modifications. In some examples, each frame of the frames include a red band, a green band, and/or a blue band.

According to certain embodiments, to process image data (e.g., raw images, L0 imagery) in-space, the present disclosure provides a fast and robust algorithm that will take in raw frames from a capture, and will stitch them into single RGB (red-green-blue) image suitable for further processing and analysis (i.e. orthorectification, georegistration, AI inferences).

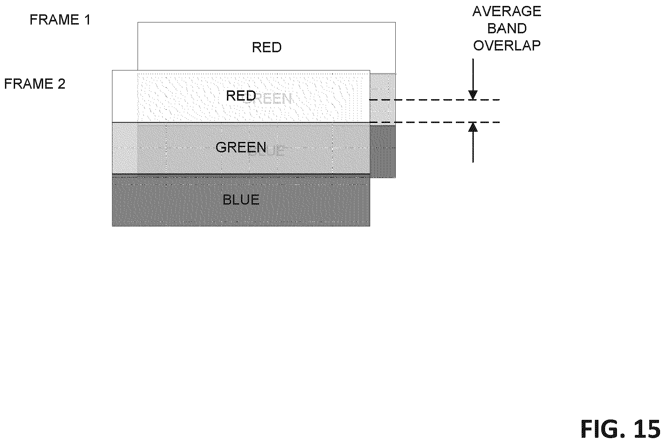

At least some embodiments of the present disclosure can solve one or more of the following challenges: 1) Exact overlap of bands (e.g., corresponding red, blue, and/or green bands) between two adjacent frames is unknown and variable across every pair of frames; and/or 2) The overlap between corresponding bands in consecutive, adjacent frames (e.g. red-band in frame #1 and red-band in frame #2) may be very low, such that not enough signal for robust intensity-based matching, as shown in FIG. 15. FIG. 15 is an illustrative example of frames and overlaps. FIG. 15 is merely an example. One of ordinary skill in the art would recognize many variations, alternatives, and modifications; and/or 3) Some frames have a very low signal, which makes them almost impossible to match using computer-vision algorithms; and/or 4) Even with pixel-precise matching of adjacent frames, the resulting image will contain blurred regions due to sub-pixel mismatch between frames; and/or 5) There are noticeable artifacts in the image due to sensor issues and radiation; and/or 6) Resulting image have only certain region in the center of the image which is fully covered by all three bands; and/or 7) Each individual frame is on a scale of 5000×5000 pixels, for example, such that it may require to take full advantage of the underlying hardware to do this efficiently. As an example, a computing device integrated with or disposed on a satellite need to process 50-100 5000×5000 pixel frames in 15 minutes by running the processing software, for example, before the computing device (e.g., the processor) switches back to capturing raw images; and/or 8) All computations should fully utilize hardware capabilities like vectorized computations and multicore processing to run on edge devices, for example, Nvidia Jetson.

According to some embodiments, the systems and methods of the present disclosure use one or more building blocks (e.g., software modules, software components, hardware and software hybrid components). Certain embodiments of the present disclosure include an image registration building block, for example, a phase-correlation based image registration to match adjacent frames in a capture. Some embodiments of the present disclosure include one or more convolution filters, for example, as a building block of post-processing algorithm to filter bad pixels. Certain embodiments of the present disclosure include unsharp masking, for example, image sharpening technique (e.g., standard image sharpening technique).

According to certain embodiments, the systems and methods for imagery registration (e.g., satellite imagery registration) are configured to determine shift (e.g., (x,y) shift) between each pair of consecutive frames in a scene. In some embodiments, the systems and methods are configured to perform image registration using phase correlation, which can overcome one or more of the following challenges including: 1) difficulty in matching same bands in adjacent frames due to potentially low overlap, for example, a system may works reliably for feature-rich areas only (e.g., urban regions); and/or 2) matching two whole frames (e.g., matching whole Frame A with Frame B) may not produce robust results due to blank stripes between all bands. For example, for images with low signal, phase correlation will match just the blank-stripes, basically aligning two frames (e.g., Frame A and Frame B) as if there was no shift at all; and/or 3) A better approach than filling blank stripes with any kind of noise (e.g., white noise).

According to some embodiments, the systems and methods for imagery registration include registration algorithm configured to match contiguous bands in consecutive frames instead of matching the same band in consecutive frames. For example, the algorithm is configured to match the green band in frame 1 with the red band in frame 2. In certain embodiments, the cross-correlation of intensities between different bands is high enough to get robust results in phase correlation. In some embodiments, the algorithm can address the challenges discussed above, for example, due to the high degree of overlap between these bands. In some examples, if the image(s) is registered properly, the black stripes in between bands can be removed.

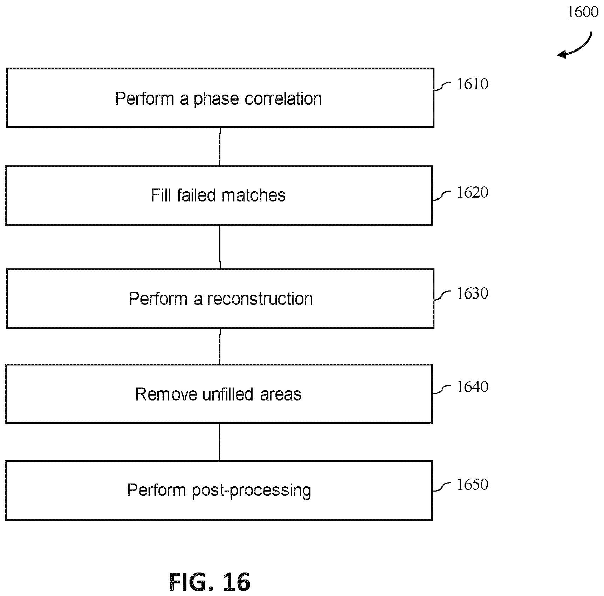

FIG. 16 is a simplified diagram showing a method for imagery registration (e.g., satellite imagery registration), according to certain embodiments of the present disclosure. This diagram is merely an example. One of ordinary skill in the art would recognize many variations, alternatives, and modifications. The method 1600 for imagery registration includes processes 1610, 1620, 1630, 1640, and 1650. Although the above has been shown using a selected group of processes for the method 1600 for imagery registration, there can be many alternatives, modifications, and variations. For example, some of the processes may be expanded and/or combined. Other processes may be inserted to those noted above. Depending upon the embodiment, the sequence of processes may be interchanged with others replaced. Further details of these processes are found throughout the present disclosure.

In some embodiments, some or all processes (e.g., steps) of the method 1600 are performed by the system 2000. In certain examples, some or all processes (e.g., steps) of the method 1600 are performed by a computer and/or a processor directed by a code. For example, a computer includes a server computer and/or a client computer (e.g., a personal computer). In some examples, some or all processes (e.g., steps) of the method 100 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at the process 1610, an imagery system (e.g., an image registration system, a satellite imagery registration system, an in-orbit satellite imagery registration system) is configured to perform a phase correlation. In certain embodiments, the imagery system uses one or more hyper parameters. In some embodiments, hyper parameters are configurable parameters. In certain embodiments, the imagery system matches a pair of frames, each frame with a selected band (e.g., frame-1-band-R with frame-2-band-G), where the selected band (e.g., the direction) is configurable and is based on direction of satellite velocity. As an example, the imagery registration system does not match the whole band/stripe, but rather a percentage (e.g., a hyper parameter, 50%) of the band to improve computational performance.

According to certain embodiments, if the confidence is lower than a threshold (e.g., a hyper parameter), the imagery system is configured to match a full band on each frame (e.g., 100% of band), for example, to achieve computational performance optimization. In some embodiments, if the confidence is still low, the imagery system is configured to match another pair of bands for two frames (e.g., frame1-band-G and frame-2-band-B), for example, in the same fashion, and to achieve required confidence in matching.

According to some embodiments, if the confidence is still low, the imagery system can perform one or more other options (e.g., four different options) for matching. In certain embodiments, if the confidence is still low if the imagery registration system performs all of the one or more options, the matching is considered as failed; otherwise, the matching is considered as succeeded.

According to certain embodiments, the imagery system is configured to repeat the procedure for every consecutive pair of frames. In some embodiments, besides confidence, the imagery system is configured to check obtained shift (e.g., (x,y) shift). In certain examples, the imagery system include pre-defined acceptable ranges for the expected frame shift based on the ground sample distance of the satellite's sensor (e.g., distance between pixels as measured on the ground) and the velocity of satellite. In certain embodiments, the imagery system can detect unexpected results from phase correlation (e.g., detect automatically), and may not send them downstream. In some embodiments, this helps improve the algorithm's robustness and improves the net power efficiency of the imagery system as the system does not waste power budget on known bad data.

According to some embodiments, at the process 1620, the imagery system is configured to fill failed matches. In certain embodiments, after the system obtained all succeeded shifts (e.g., (x,y) shift) for K pairs of frames (e.g., correlated pairs of frames), the system is configured to use K-averaged (x,y) for the rest of pairs of frames (e.g., uncorrelated pairs of frames, failed pairs of frames). In some embodiments, this means that the imagery system (e.g., using the image registration algorithm) can produce reasonable registration results even if part of the sequence of captures is over an area where phase correlation might produce poor results.

According to certain embodiments, at the process 1630, the imagery system is configured to perform a reconstruction to generate a reconstructed image. In some embodiments, based on obtained shifts, the system is configured to reconstruct image(s) (e.g., L1 image(s)) from all available frames by consecutively inserting each band of each frame into resulting image(s). In certain embodiments, the system is configured to not insert the whole frame, since it contains blank stripes.

According to some embodiments, at the process 1640, the imagery system is configured to remove unfilled areas to generate a result image. In certain embodiments, the resulting image(s) has areas on the side that are either uncovered or covered by one or more bands (e.g., at most 2 of the 3 bands). In some embodiments, processing models only care about the full RGB image. In certain embodiments, the imagery system is configured to mask-out or crop the areas that are not full RGB, and leave only full RGB areas.

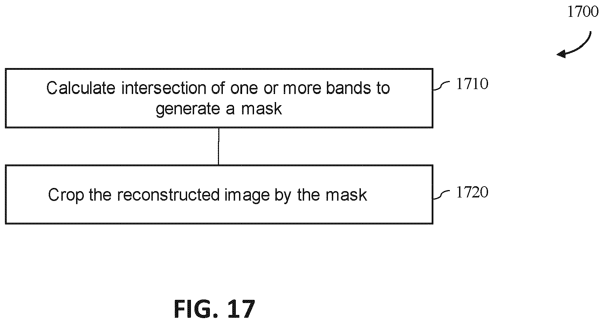

FIG. 17 is a simplified diagram showing a method for removing unfilled areas (e.g., masking), according to certain embodiments of the present disclosure. This diagram is merely an example. One of ordinary skill in the art would recognize many variations, alternatives, and modifications. The method 1700 for removing unfilled areas includes processes 1710 and 1720. Although the above has been shown using a selected group of processes for the method 1700 for removing unfilled areas, there can be many alternatives, modifications, and variations. For example, some of the processes may be expanded and/or combined. Other processes may be inserted to those noted above. Depending upon the embodiment, the sequence of processes may be interchanged with others replaced. Further details of these processes are found throughout the present disclosure.

In some embodiments, some or all processes (e.g., steps) of the method 1700 are performed by the system 2000. In certain examples, some or all processes (e.g., steps) of the method 1700 are performed by a computer and/or a processor directed by a code. For example, a computer includes a server computer and/or a client computer (e.g., a personal computer). In some examples, some or all processes (e.g., steps) of the method 100 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to certain embodiments, at the process 1710, the imagery system is configured to calculate intersection of one or more bands (e.g., all bands, red-green-blue bands) of the reconstructed image (e.g., L1 image). For example, the imagery system is configured to start with red band, green band (e.g., Red [+] Green bands), and then blue band (e.g., Blue band). In some embodiments, the imagery system is configured to determine one or more intersections (e.g., all intersections), which form RGB space. In certain embodiments, the imagery system is configured to calculate union of the intersections to generate a mask (e.g., the final mask).

According to some embodiments, at the process 1720, the imagery system is configured to crop the reconstructed image by the mask, for example, setting all pixels to black outside of the mask. In certain examples, this is an efficient way to calculate RGB mask on the pixel level, which can be important (i.e., critical) when working with large images. In some examples provided herein, large images may be 100 megapixel (MP) images, or images that are between 75 and 115 MP, or images that are between 50 and 150 MP.

Returning back to FIG. 16, according to certain embodiments, at the process 1630, the imagery system is configured to perform post-processing to the result image to generate a processed image. In some embodiments, the imagery system is configured to remove one or more visual artifacts from the resulting image.

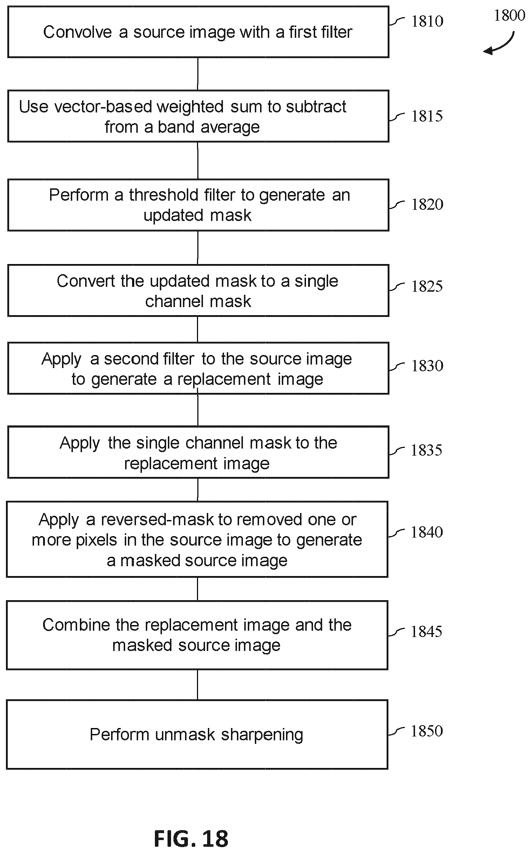

FIG. 18 is a simplified diagram showing a method for removing visual artifacts, according to certain embodiments of the present disclosure. This diagram is merely an example. One of ordinary skill in the art would recognize many variations, alternatives, and modifications. The method 1800 for removing visual artifacts includes processes 1810, 1815, 1820, 1825, 1830, 1835, 1840, 1845, and 1850. Although the above has been shown using a selected group of processes for the method 1800 for removing visual artifacts, there can be many alternatives, modifications, and variations. For example, some of the processes may be expanded and/or combined. Other processes may be inserted to those noted above. Depending upon the embodiment, the sequence of processes may be interchanged with others replaced. Further details of these processes are found throughout the present disclosure.

In some embodiments, some or all processes (e.g., steps) of the method 1800 are performed by the system 2000. In certain examples, some or all processes (e.g., steps) of the method 1800 are performed by a computer and/or a processor directed by a code. For example, a computer includes a server computer and/or a client computer (e.g., a personal computer). In some examples, some or all processes (e.g., steps) of the method 100 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to certain embodiments, at the process 1810, the imagery system is configured to convolve a source image (e.g., the result image of the process 1640 in FIG. 16) with a first filter (e.g., a 2D kernel/filter). For example, the first filter includes the following 2D kernel/filter:
[[0., -.25, 0.],
[-.25, 1., -.25],
[0., -.25, 0.]]

In some examples, by applying the above filter, the system obtains a difference between a given pixel and an average of four surrounded pixels. In certain examples, the first filter can be used to isolate outlier pixels in each band (e.g., red-band, green band). In some examples, this is the first step to generate a mask to remove one or more visual artifacts (e.g., bad pixels).

According to some embodiments, the imagery system is configured to access a mask (e.g., an RGB mask, a mark generated by the process 1610 in FIG. 16). In certain embodiments, at the process 1815, the imagery system is configured to process the mask (e.g., the RGB mask) using vector-based weighted sum to subtract from each band average of two other bands. For example, the process includes R = R - 0.5*B - 0.5*G, for R as red-band, Gas green band, and B as blue-band. As an example, the process can include other processing techniques. In some embodiments, using the process, the imagery system can filter pixels with strong intensity only in a single band, for example, only R or G or B bright pixels are of interests, while others are not of interests (e.g., false positive).

According to certain embodiments, at the process 1820, the imagery system is configured to perform a threshold filter to the processed mask to generate an updated mask (e.g., an RGB mask). In some embodiments, the updated mask include values for one or more bands (e.g., each band, each of RGB band).

According to some embodiments, at the process 1825, the imagery system is configured to convert the updated mask to a single channel mask, for example, by applying max() function to every pixel. In some examples, the single channel mask is a mask (e.g., a generated or filtered region) that includes one of the RGB values of a pixel, such as the maximum value between a red value, a green value, and/or a blue value. In some examples, the single channel mask is a mask that maps a pixel value (e.g., an RGB value) to a discrete value, such as based on a defined mapping. In certain embodiments, the single channel mask is a binary mask, for example, for the whole image. In some embodiments, at the process 1830, the imagery system is configured to apply a second filter (e.g., a medium kernel filter, a medium kernel filter with 3x3 size) to the source image to get a replacement image (e.g., with replacement pixels).

According to certain embodiments, at the process 1835, the imagery system is configured to apply the single channel mask to the replacement image, for example, to get picture with only pixels to be replaced. In some embodiments, at the process 1840, the imagery system is configured to apply a reversed mask (e.g., a mask that is reversed from the single channel mask) to the source image, for example, to remove one or more pixels (e.g., bad pixels) to generate a masked source image. In some embodiments, a reversed mask includes a value that is reversed from a correspond value of the mask. For example, a reversed mask has a value of "masked" corresponding to the mask has a value of "unmasked". As an example, a reversed mask has a value of "unmasked" corresponding to the mask has a value of "masked".

According to some embodiments, at the process 1845, the imagery system is configured to combine (e.g., add) the replacement image and the masked source image (e.g., the source image with removed pixels). In certain embodiments, the processes 1810-1845 are vector-based (e.g., optimized for parallel execution), for example, are efficient (e.g., very efficient).

According to certain embodiments, at the process 1850, the imagery system is configured to perform unmask sharpening. In some embodiments, the imagery system uses the unmask sharpening to remove blurriness caused by sub-pixel inaccuracy of matched bands. In some examples, sub-pixel inaccuracy comes from the fact that the system can align R/G/B bands only with pixel accuracy. In certain examples, objects in the image (e.g., on the map) are so small that they end up with blurred edges in bands alignment.

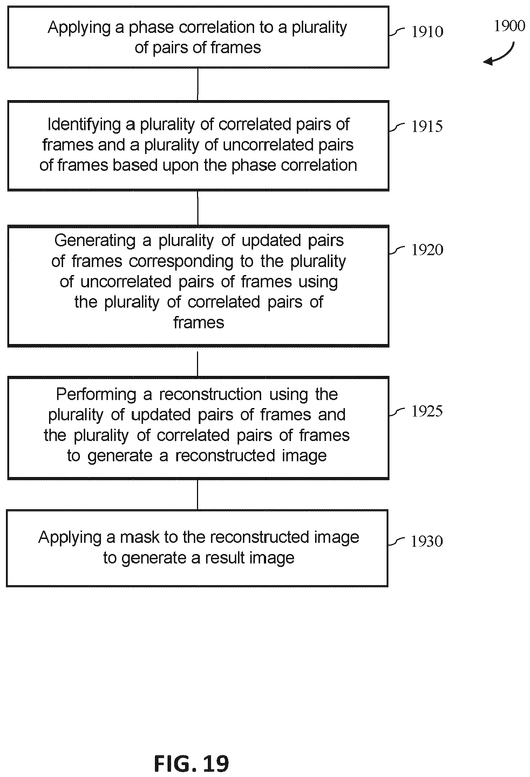

FIG. 19 is a simplified diagram showing a method for device constellations (e.g., meta-constellations) according to certain embodiments of the present disclosure. This diagram is merely an example. One of ordinary skill in the art would recognize many variations, alternatives, and modifications. The method 1900 for device constellations includes processes 1910, 1915, 1920, 1925, and 1930. Although the above has been shown using a selected group of processes for the method 1900 for device constellations, there can be many alternatives, modifications, and variations. For example, some of the processes may be expanded and/or combined. Other processes may be inserted to those noted above. Depending upon the embodiment, the sequence of processes may be interchanged with others replaced. Further details of these processes are found throughout the present disclosure.

In some embodiments, some or all processes (e.g., steps) of the method 1900 are performed by the system 2000. In certain examples, some or all processes (e.g., steps) of the method 1900 are performed by a computer and/or a processor directed by a code. For example, a computer includes a server computer and/or a client computer (e.g., a personal computer). In some examples, some or all processes (e.g., steps) of the method 1900 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at the process 1910, the system is configured to apply a phase correlation to a plurality of pairs of frames. In some embodiments, prior to applying a phase correlation, the system is configured to receive the plurality of frames. For example, the plurality of frames may be received from one or more satellites. In some embodiments, the plurality of pairs of frames correspond to one or more of a red band, a green band, and a blue band.

According to some embodiments, at the process 1915, the system is configured to identify a plurality of correlated pairs of frames and a plurality of uncorrelated pairs of frames based upon the phase correlation.

According to some embodiments, at the process 1920, the system is configured to generate a plurality of updated pairs of frames corresponding to the plurality of uncorrelated pairs of frames using the plurality of correlated pairs of frames.

According to some embodiments, at the process 1925, the system is configured to perform a reconstruction using the plurality of updated pairs of frames and the plurality of correlated pairs of frames to generate a reconstructed image.

According to some embodiments, at the process 1930, the system is configured to apply a mask to the reconstructed image to generate a result image. In some embodiments, applying the mask to the reconstructed image includes calculating one or more intersections of one or more bands of the reconstructed image to generate the mask. In some embodiments, applying the mask to the reconstructed image includes cropping the reconstructed image by the mask to generate the result image.

In some embodiments, after the process 1930, the system is configured to perform a post-processing to the result image to generate a processed image. In some embodiments, performing the post processing includes: applying a first filter to the result image; processing the mask using a vector-based weighted sum of the mask to generate a processed mask; applying a threshold filter to the processed mask to generate an updated mask; converting the updated mask to a single channel mask; applying a second filter to the result image to generate a replacement image; applying the single channel mask to the replacement image to generate a masked replacement image; applying a reversed mask of the single channel mask to the result image to generate a masked result image; and combining the masked replacement image with the masked result image to generate the processed image.

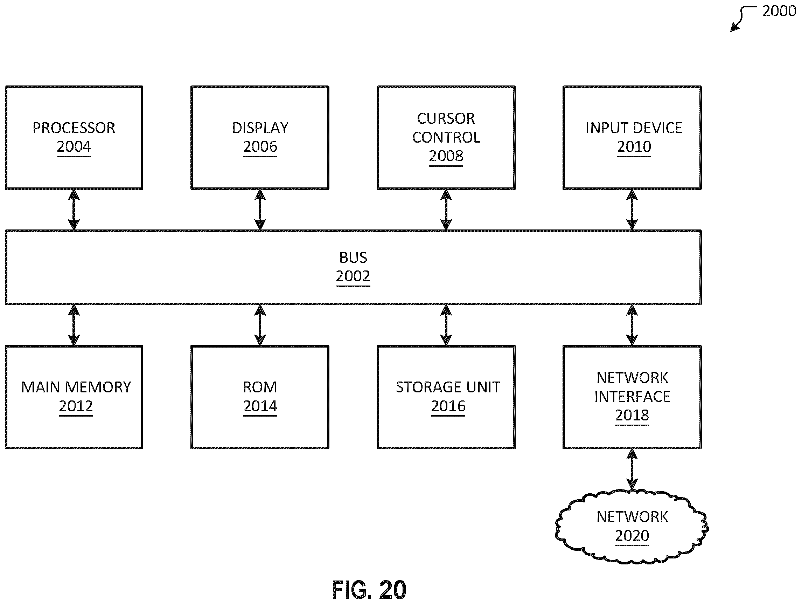

FIG. 20 is a simplified diagram showing a computing system for imagery registration according to one embodiment of the present invention. This diagram is merely an example, which should not unduly limit the scope of the claims. One of ordinary skill in the art would recognize many variations, alternatives, and modifications. The computing system 2000 includes a bus 2002 or other communication mechanism for communicating information, a processor 2004, a display 2006, a cursor control component 2008, an input device 2010, a main memory 2012, a read only memory (ROM) 2014, a storage unit 2016, and a network interface 2018.

In some embodiments, some or all processes (e.g., steps) of the method 100, 1600, 1700, 1800, and/or 1900 are performed by the computing system 2000. In some examples, the bus 2002 is coupled to the processor 2004, the display 2006, the cursor control component 2008, the input device 2010, the main memory 2012, the read only memory (ROM) 2014, the storage unit 2016, and/or the network interface 2018. In certain examples, the network interface is coupled to a network 2020. For example, the processor 2004 includes one or more general purpose microprocessors. In some examples, the main memory 2012 (e.g., random access memory (RAM), cache and/or other dynamic storage devices) is configured to store information and instructions to be executed by the processor 2004. In certain examples, the main memory 2012 is configured to store temporary variables or other intermediate information during execution of instructions to be executed by processor 2004. For examples, the instructions, when stored in the storage unit 2016 accessible to processor 2004, render the computing system 2000 into a special-purpose machine that is customized to perform the operations specified in the instructions. In some examples, the ROM 2014 is configured to store static information and instructions for the processor 2004. In certain examples, the storage unit 2016 (e.g., a magnetic disk, optical disk, or flash drive) is configured to store information and instructions.

According to some embodiments, a method implemented by a computer system having one or more processors and one or more memories, the method comprising: applying a phase correlation to a plurality of pairs of frames; identifying a plurality of correlated pairs of frames and a plurality of uncorrelated pairs of frames based upon the phase correlation; generating a plurality of updated pairs of frames corresponding to the plurality of uncorrelated pairs of frames using the plurality of correlated pairs of frames; performing a reconstruction using the plurality of updated pairs of frames and the plurality of correlated pairs of frames to generate a reconstructed image; and applying a mask to the reconstructed image to generate a result image. For example, the method is implemented according to at least FIG. 16, FIG. 17, FIG. 18, and/or FIG. 19.

In certain embodiments, the method further includes performing a post-processing to the result image to generate a processed image. In some embodiments, the method further includes applying a mask to the reconstructed image by: calculating one or more intersections of one or more bands of the reconstructed image to generate the mask; and cropping the reconstructed image by the mask to generate the result image. In certain embodiments, the method further includes performing a post processing by: applying a first filter to the result image; processing the mask using a vector-based weighted sum of the mask to generate a processed mask; applying a threshold filter to the processed mask to generate an updated mask; converting the updated mask to a single channel mask; applying a second filter to the result image to generate a replacement image; applying the single channel mask to the replacement image to generate a masked replacement image; applying a reversed mask of the single channel mask to the result image to generate a masked result image; and combining the masked replacement image with the masked result image to generate the processed image.

In some embodiments, the method includes, prior to the applying a phase correlation, receiving the plurality of pairs of frames from one or more satellites. In some embodiments, the plurality of pairs of frames correspond to one or more of a red band, a green band, and a blue band. In some embodiments, each frame of the plurality of pairs of frames include between 75 and 115 megapixels.

According to certain embodiments, a computing device is provided. The computing device includes one or more memories comprising instructions stored thereon; and one or more processors configured to execute the instructions and perform operations comprising: applying a phase correlation to a plurality of pairs of frames; identifying a plurality of correlated pairs of frames and a plurality of uncorrelated pairs of frames based upon the phase correlation; generating a plurality of updated pairs of frames corresponding to the plurality of uncorrelated pairs of frames using the plurality of correlated pairs of frames; performing a reconstruction using the plurality of updated pairs of frames and the plurality of correlated pairs of frames to generate a reconstructed image; and applying a mask to the reconstructed image to generate a result image.

In certain embodiments, the operations further include performing a post-processing to the result image to generate a processed image. In some embodiments, the operations further include applying a mask to the reconstructed image by: calculating one or more intersections of one or more bands of the reconstructed image to generate the mask; and cropping the reconstructed image by the mask to generate the result image. In certain embodiments, the operations further includes performing a post processing by: applying a first filter to the result image; processing the mask using a vector-based weighted sum of the mask to generate a processed mask; applying a threshold filter to the processed mask to generate an updated mask; converting the updated mask to a single channel mask; applying a second filter to the result image to generate a replacement image; applying the single channel mask to the replacement image to generate a masked replacement image; applying a reversed mask of the single channel mask to the result image to generate a masked result image; and combining the masked replacement image with the masked result image to generate the processed image.

In some embodiments, the operations include, prior to the applying a phase correlation, receiving the plurality of pairs of frames from one or more satellites. In some embodiments, the plurality of pairs of frames correspond to one or more of a red band, a green band, and a blue band. In some embodiments, each frame of the plurality of pairs of frames include between 75 and 115 megapixels.

According to some embodiments, a method implemented by a computer system having one or more processors and one or more memories, the method comprising: applying a phase correlation to a plurality of pairs of frames; identifying a plurality of correlated pairs of frames and a plurality of uncorrelated pairs of frames based upon the phase correlation; generating a plurality of updated pairs of frames corresponding to the plurality of uncorrelated pairs of frames using the plurality of correlated pairs of frames; performing a reconstruction using the plurality of updated pairs of frames and the plurality of correlated pairs of frames to generate a reconstructed image, wherein the reconstructed image comprises one or more bands; and applying a mask to the reconstructed image to generate a result image, wherein the applying a mask to the reconstructed image comprises: calculating one or more intersections of the one or more bands of the reconstructed image to generate the mask; and cropping the reconstructed image by the mask to generate the result image. For example, the method is implemented according to at least FIG. 16, FIG. 17, FIG. 18, and/or FIG. 19.

In some embodiments, the one or more bands comprise a red band, a green band, and a blue band. In certain embodiments, the method further includes performing a post-processing to the result image to generate a processed image. In certain embodiments, the method further includes performing a post processing by: applying a first filter to the result image; processing the mask using a vector-based weighted sum of the mask to generate a processed mask; applying a threshold filter to the processed mask to generate an updated mask; converting the updated mask to a single channel mask; applying a second filter to the result image to generate a replacement image; applying the single channel mask to the replacement image to generate a masked replacement image; applying a reversed mask of the single channel mask to the result image to generate a masked result image; and combining the masked replacement image with the masked result image to generate the processed image.

In some embodiments, the method includes, prior to the applying a phase correlation, receiving the plurality of pairs of frames from one or more satellites. In some embodiments, the plurality of pairs of frames correspond to one or more of a red band, a green band, and a blue band. In some embodiments, each frame of the plurality of pairs of frames include between 75 and 115 megapixels.

According to certain embodiments, a computing device is provided. The computing device includes one or more memories comprising instructions stored thereon; and one or more processors configured to execute the instructions and perform operations comprising: applying a phase correlation to a plurality of pairs of frames; identifying a plurality of correlated pairs of frames and a plurality of uncorrelated pairs of frames based upon the phase correlation; generating a plurality of updated pairs of frames corresponding to the plurality of uncorrelated pairs of frames using the plurality of correlated pairs of frames; performing a reconstruction using the plurality of updated pairs of frames and the plurality of correlated pairs of frames to generate a reconstructed image; and applying a mask to the reconstructed image to generate a result image.

For example, some or all components of various embodiments of the present disclosure each are, individually and/or in combination with at least another component, implemented using one or more software components, one or more hardware components, and/or one or more combinations of software and hardware components. In another example, some or all components of various embodiments of the present disclosure each are, individually and/or in combination with at least another component, implemented in one or more circuits, such as one or more analog circuits and/or one or more digital circuits. In yet another example, while the embodiments described above refer to particular features, the scope of the present disclosure also includes embodiments having different combinations of features and embodiments that do not include all of the described features. In yet another example, various embodiments and/or examples of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented for example as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations, one or more features from a combination can in some cases be removed from the combination, and a combination may, for example, be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the invention is not to be limited by the specific illustrated embodiments.

## Claims

1. A method implemented by a computer system having one or more processors and one or more memories, the method comprising:
applying a phase correlation to a plurality of pairs of frames;
identifying a plurality of correlated pairs of frames and a plurality of uncorrelated pairs of frames based upon the phase correlation;
generating a plurality of updated pairs of frames corresponding to the plurality of uncorrelated pairs of frames using the plurality of correlated pairs of frames;
performing a reconstruction using the plurality of updated pairs of frames and the plurality of correlated pairs of frames to generate a reconstructed image; and
applying a mask to the reconstructed image to generate a result image.

2. The method of claim 1, further comprising:
prior to the applying a phase correlation, receiving the plurality of pairs of frames from one or more satellites.

3. The method of claim 1 or claim 2, wherein the plurality of pairs of frames correspond to one or more of a red band, a green band, and a blue band.

4. The method of any preceding claim, wherein the applying a mask to the reconstructed image comprises:
calculating one or more intersections of one or more bands of the reconstructed image to generate the mask; and
cropping the reconstructed image by the mask to generate the result image.

5. The method of any preceding claim, further comprising:
performing a post-processing to the result image to generate a processed image.

6. The method of claim 5, wherein the performing a post processing comprises:
applying a first filter to the result image;
processing the mask using a vector-based weighted sum of the mask to generate a processed mask;
applying a threshold filter to the processed mask to generate an updated mask;
converting the updated mask to a single channel mask;
applying a second filter to the result image to generate a replacement image;
applying the single channel mask to the replacement image to generate a masked replacement image;
applying a reversed mask of the single channel mask to the result image to generate a masked result image; and
combining the masked replacement image with the masked result image to generate the processed image.

7. The method of any preceding claim, wherein each frame of the plurality of pairs of frames comprises between 75 and 115 megapixels.

8. The method of claim 1, wherein the reconstructed image comprises one or more bands, and wherein the applying a mask to the reconstructed image comprises:
calculating one or more intersections of the one or more bands of the reconstructed image to generate a mask; and
cropping the reconstructed image by the mask to generate the result image.

9. The method of claim 8, wherein the one or more bands comprise a red band, a green band, and a blue band.

10. The method of claim 8 or claim 9, further comprising:
prior to applying a phase correlation, receiving the plurality of pairs of frames from one or more satellites.

11. The method of any of claims 8 to 10, further comprising:
performing a post-processing to the result image to generate a processed image.

12. The method of claim 11, further comprising:
applying a first filter to the result image;
processing the mask using a vector-based weighted sum of the mask to generate a processed mask;
applying a threshold filter to the processed mask to generate an updated mask;
converting the updated mask to a single channel mask;
applying a second filter to the result image to generate a replacement image;
applying the single channel mask to the replacement image to generate a masked replacement image;
applying a reversed mask of the single channel mask to the result image to generate a masked result image; and
combining the masked replacement image with the masked result image to generate the processed image.

13. The method of any of claims 8 to 12, wherein each frame of the plurality of frames comprises between 75 and 11 megapixels.

14. A computing device comprising:
one or more memories comprising instructions stored thereon; and
one or more processors configured to execute the instructions and perform operations according to the method of any preceding claim.
